# EUROPÄISCHE PATENTSCHRIFT

(11) **EP 3 372 404 B1**
(45) Veröffentlichungstag und Bekanntmachung des Hinweises auf die Patenterteilung: **25.08.2021**
(21) Anmeldenummer: 17180166.5
(22) Anmeldetag: 07.07.2017
(51) Int. Cl.: B33Y 10/00, B33Y 30/00, B22F 3/105, B29C 64/153, B29C 64/277, B29C 64/364, B22F 10/00, B22F 10/10

(54) **VORRICHTUNG ZUR ADDITIVEN HERSTELLUNG DREIDIMENSIONALER OBJEKTE**
DEVICE FOR ADDITIVE PRODUCTION OF THREE-DIMENSIONAL OBJECTS
DISPOSITIF DE FABRICATION ADDITIVE D'OBJETS TRIDIMENSIONNELS

(30) Priorität: 09.03.2017 DE 102017105056
(43) Veröffentlichungstag der Anmeldung: 12.09.2018
(60) Teilanmeldung: 21183033.6
(73) Patentinhaber: CL Schutzrechtsverwaltungs GmbH, 96215 Lichtenfels (DE)
(72) Erfinder: Pontiller-Schymura, Peter, 95512 Neudrossenfeld (DE); Döhler, Tim, 96269 Großheirath (DE); Trutschel, Felix, 96328 Küps (DE)
(74) Vertreter: Hafner & Kohl PartmbB

(56) Entgegenhaltungen:
- WO-A1-2016/096407
- US-A- 5 393 482
- US-A1- 2013 064 706
- US-A1- 2015 064 048
- US-A1- 2016 236 299
- US-A1- 2016 250 717
- US-A1- 2017 008 126

## Beschreibung

Die Erfindung betrifft eine Vorrichtung zur additiven Herstellung dreidimensionaler Objekte durch sukzessives schichtweises selektives Bestrahlen und damit einhergehendes sukzessives schichtweises selektives Verfestigen von Baumaterialschichten aus einem vermittels eines Energiestrahls verfestigbaren Baumaterial, umfassend mehrere Bestrahlungseinrichtungen, welche jeweils zur Erzeugung wenigstens eines Energiestrahls eingerichtet sind, sowie eine Steuereinrichtung, welche zur Erzeugung von den Betrieb der Bestrahlungseinrichtungen steuernden Steuerinformationen und zur Steuerung des Betriebs der Bestrahlungseinrichtungen auf Grundlage erzeugter Steuerinformationen eingerichtet ist. Die erfindungsgemässe Vorrichtung und das erfindungsgemässe Verfahren sind in Ansprüchen 1 und 14 beschrieben.

Vorrichtungen zur additiven Herstellung dreidimensionaler Objekte sind dem Grunde nach bekannt. Vermittels entsprechenden Vorrichtungen werden herzustellende dreidimensionale Objekte durch sukzessives schichtweises selektives Bestrahlen und damit einhergehendes sukzessives schichtweises selektives Verfestigen von Baumaterialschichten in den dem schichtbezogenen Querschnitt des herzustellenden Objekts entsprechenden Bereichen aus einem vermittels eines Energiestrahls verfestigbaren Baumaterial additiv aufgebaut.

Weiterhin ist es bekannt, dass, um möglichst optimale Eigenschaften jeweiliger additiv herzustellender Objekte zu realisieren, eine Temperierung selektiv zu verfestigender bzw. selektiv verfestigter Baumaterialschichten zweckmäßig ist. Eine entsprechende Temperierung kann z. B. bei, typischerweise vorgetrockneten, hygroskopischen Baumaterialien, d. h. z. B. Aluminium, zur Reduzierung der Gasporosität, d. h. insbesondere der Wasserstoffporosität, beitragen.

Bis dato erfolgt eine Temperierung selektiv zu verfestigender bzw. selektiv verfestigter Baumaterialschichten üblicherweise über in ein eine Baukammer definierendes Baumodul integrierte Heizelemente, d. h. z. B. Widerstandsheizelemente. Die Heizelemente können z. B. in eine die Baukammer bodenseitig begrenzende Bodenplatte des Baumoduls integriert sein. Die über die Heizelemente in die Baukammer flächig eingebrachte thermische Energie sorgt für eine gewisse Temperierung des in der Baukammer befindlichen, gegebenenfalls vorgetrockneten, Baumaterials.

Dieses Prinzip der Temperierung ist in mehrfacher Hinsicht weiterentwicklungsbedürftig; dies insbesondere deshalb, als es keine Vortrocknung des Baumaterials und keine lokale Temperierung des Baumaterials ermöglicht. Zudem ist die Temperierung des Baumaterials mit entsprechenden Heizelementen auf einen Temperaturgrenzwert beschränkt, welcher im Hinblick auf die Verarbeitung neuartiger, insbesondere hochschmelzender, Materialien, zu gering sein kann.

US 2013/064706 A1 offenbart eine optische Bestrahlungseinheit für eine Anlage zur Herstellung von Werkstücken durch Bestrahlen von Pulverschichten mit Laserstrahlung.

US 2017/008126 A1 offenbart eine additive Fertigungseinrichtung mit einer mehrere Strahlungsquellen umfassenden Bestrahlungseinrichtung.

US 2015/064048 A1 offenbart eine additive Fertigungseinrichtung mit einer mehrere unterschiedliche Strahlungsquellen umfassenden Bestrahlungseinrichtung.

WO 2016/096407 A1 offenbart ein Verfahren zur additiven Herstellung dreidimensionaler Objekte.

US 2016/236299 A1 offenbart eine Vorrichtung zur Herstellung eines dreidimensionalen Objekts mittels schichtweiser Verfestigung eines pulverförmigen Aufbaumaterials durch elektromagnetische Strahlung oder Teilchenstrahlung.

US 5 393 482 A offenbart eine additive Fertigungseinrichtung mit einer mehrere Strahlungsquellen umfassenden Bestrahlungseinrichtung.

US 2016/250717 A1 offenbart ein Verfahren zur Herstellung eines dreidimensionalen Objekts vermittels einer Bestrahlungseinrichtung, wobei Laser-Nebenstrahlen dem Hauptstrahl nachfolgen.

Der Erfindung liegt die Aufgabe zugrunde, eine demgegenüber verbesserte Vorrichtung zur additiven Herstellung dreidimensionaler Objekte anzugeben.

Die Aufgabe wird durch eine Vorrichtung zur additiven Herstellung dreidimensionaler Objekte gemäß Anspruch 1 gelöst. Die hierzu abhängigen Ansprüche betreffen mögliche Ausführungsformen der Vorrichtung.

Die hierin beschriebene Vorrichtung ("Vorrichtung") ist zur additiven Herstellung dreidimensionaler Objekte, d. h. beispielsweise technischer Bauteile bzw. technischer Bauteilgruppen, durch sukzessives schichtweises selektives Bestrahlen und damit einhergehendes sukzessives schichtweises selektives Verfestigen von Baumaterialschichten aus einem verfestigbaren Baumaterial in den dem schichtbezogenen Querschnitt des jeweils herzustellenden Objekts entsprechenden Baumaterialschichtbereichen eingerichtet. Bei dem Baumaterial kann es sich um ein partikuläres bzw. pulverförmiges Metall-, Kunststoff- und/oder Keramikmaterial handeln. Die selektive Verfestigung jeweiliger selektiv zu verfestigender Baumaterialschichten erfolgt auf Grundlage objektbezogener Baudaten. Entsprechende Baudaten beschreiben die geometrisch-konstruktive Gestalt des jeweils additiv herzustellenden Objekts und können beispielsweise "geslicte" Daten des additiv herzustellenden Objekts beinhalten.

Die Vorrichtung kann z. B. als Vorrichtung zur Durchführung selektiver Laserschmelzverfahren (abgekürzt SLM-Verfahren), oder als Vorrichtung zur Durchführung selektiver Lasersinterverfahren (abgekürzt SLS-Verfahren), ausgebildet sein. Denkbar ist es auch, dass die Vorrichtung als Vorrichtung zur Durchführung selektiver Elektronenstrahlschmelzverfahren (abgekürzt SEBS-Verfahren), ausgebildet ist.

Die Vorrichtung umfasst die zur Durchführung additiver Bauvorgänge typischerweise erforderlichen Funktionskomponenten. Hierzu zählen insbesondere wenigstens eine Beschichtungseinrichtung und wenigstens eine Bestrahlungseinrichtung. Eine entsprechende Beschichtungseinrichtung ist zur Ausbildung selektiv zu verfestigender Baumaterialschichten in einer Bauebene der Vorrichtung, in welcher die sukzessive schichtweise selektive Bestrahlung und die damit einhergehende sukzessive schichtweise selektive Verfestigung von Baumaterialschichten erfolgt, eingerichtet und umfasst hierzu typischerweise ein relativ zu der Bauebene bewegbar gelagertes, insbesondere klingenartiges bzw. -förmiges, Beschichtungselement. Eine entsprechende Bestrahlungseinrichtung ist zur selektiven Bestrahlung selektiv zu verfestigender Baumaterialschichten in der Bauebene der Vorrichtung eingerichtet und umfasst hierzu typischerweise eine Energiestrahlerzeugungseinrichtung, welche zur Erzeugung eines Energiestrahls eingerichtet ist, und gegebenenfalls eine auch als Scannereinrichtung zu bezeichnende bzw. zu erachtende Energiestrahlablenkeinrichtung, welche zur Ablenkung eines Energiestrahls auf jeweilige Baumaterialschichten eingerichtet ist.

Die hierin beschriebene Vorrichtung umfasst mehrere Bestrahlungseinrichtungen. Jede Bestrahlungseinrichtung umfasst eine zur Erzeugung eines Energiestrahls, d. h. insbesondere eines Laserstrahls, definierbarer Energiestrahleigenschaften eingerichtete Energiestrahlerzeugungseinrichtung. Jede Bestrahlungseinrichtung kann ferner eine zur Ablenkung des durch die ihr eigene Energiestrahlerzeugungseinrichtung erzeugten Energiestrahls auf jeweilige selektiv zu bestrahlende bzw. selektiv zu verfestigende Bereiche jeweiliger Baumaterialschichten eingerichtete Energiestrahlablenkeinrichtung umfassen. Denkbar ist es auch, dass eine (einzige) Energiestrahlablenkeinrichtung den jeweiligen Energiestrahlerzeugungseinrichtungen unterschiedlicher Bestrahlungseinrichtungen zugeordnet ist, wobei die Energiestrahlablenkeinrichtung eingerichtet ist, die von den dieser zugeordneten Energiestrahlerzeugungseinrichtungen erzeugten Energiestrahlen auf jeweilige selektiv zu bestrahlende bzw. selektiv zu verfestigende Bereiche jeweiliger Baumaterialschichten abzulenken.

Die Vorrichtung umfasst eine hard- und/oder softwaremäßig implementierte Steuereinrichtung. Die Steuereinrichtung ist den Bestrahlungseinrichtungen steuerungstechnisch zuordenbar bzw. zugeordnet und zur Erzeugung von den Betrieb der Bestrahlungseinrichtungen steuernden Steuerinformationen sowie zur Steuerung des Betriebs der Bestrahlungseinrichtungen auf Grundlage entsprechend erzeugter Steuerinformationen eingerichtet. Die Steuerung des Betriebs jeweiliger Bestrahlungseinrichtungen beinhaltet insbesondere die Steuerung der Energiestrahleigenschaften eines erzeugten Energiestrahls, d. h. z. B. der Energiestrahlintensität und/oder des Energiestrahlstrahlfokusdurchmessers, sowie die Steuerung der Bewegungseigenschaften eines erzeugten Energiestrahls, d. h. z. B. einer Bewegungsbahn, entlang welcher sich ein Energiestrahl über eine selektiv zu verfestigende Baumaterialschicht bewegt, bzw. bestimmter im Zusammenhang mit einer Bewegung des Energiestrahls stehender Bewegungsparameter, wie z. B. der Bewegungsgeschwindigkeit, mit welcher ein Energiestrahl über eine selektiv zu verfestigende Baumaterialschicht bewegt wird.

Die Steuereinrichtung ist, wie sich im Weiteren ergibt, eingerichtet, unterschiedliche Steuerinformationen für unterschiedliche Bestrahlungseinrichtungen zu erzeugen, sodass sich die von unterschiedlichen Bestrahlungseinrichtungen erzeugten Energiestrahlen z. B. in einzelnen oder mehreren Energiestrahleigenschaften und/oder in einzelnen oder mehreren Bewegungseigenschaften unterscheiden.

Konkret ist die Steuereinrichtung eingerichtet, erste Steuerinformationen zur Steuerung des Betriebs wenigstens einer ersten Bestrahlungseinrichtung zu erzeugen, auf Grundlage welcher die erste Bestrahlungseinrichtung einen ersten Energiestrahl zur sukzessiven schichtweisen selektiven Verfestigung einer Baumaterialschicht erzeugt. Eine seitens der Steuereinrichtung als erste Bestrahlungseinrichtung definierte Bestrahlungseinrichtung ist auf Grundlage einer auf ersten Steuerinformationen basierenden Ansteuerung durch die Steuereinrichtung angesteuert bzw. betrieben, einen Energiestrahl zur sukzessiven schichtweisen selektiven Verfestigung einer Baumaterialschicht zu erzeugen. Selbstverständlich können seitens der Steuereinrichtung mehrere Bestrahlungseinrichtungen als erste Bestrahlungseinrichtungen definiert bzw. betrieben werden, welche sonach jeweils auf Grundlage einer auf ersten Steuerinformationen basierenden Ansteuerung durch die Steuereinrichtung angesteuert bzw. betrieben sind, einen Energiestrahl zur sukzessiven schichtweisen selektiven Verfestigung einer Baumaterialschicht zu erzeugen.

Die Steuereinrichtung ist weiter eingerichtet, zweite Steuerinformationen zur Steuerung des Betriebs wenigstens einer zweiten Bestrahlungseinrichtung zu erzeugen, auf Grundlage welcher die zweite Bestrahlungseinrichtung einen zweiten Energiestrahl zur thermischen Vorbehandlung einer selektiv zu verfestigenden Baumaterialschicht, insbesondere in einem selektiv zu verfestigenden Bereich der Baumaterialschicht, und/oder einen zweiten Energiestrahl zur thermischen Nachbehandlung einer selektiv verfestigten Baumaterialschicht, insbesondere in einem selektiv verfestigten Bereich der Baumaterialschicht, erzeugt. Eine seitens der Steuereinrichtung als zweite Bestrahlungseinrichtung definierte Bestrahlungseinrichtung ist auf Grundlage einer auf zweiten Steuerinformationen basierenden Ansteuerung durch die Steuereinrichtung angesteuert bzw. betrieben, einen Energiestrahl zur thermischen Vorbehandlung einer selektiv zu verfestigenden Baumaterialschicht, insbesondere in einem selektiv zu verfestigenden Bereich der Baumaterialschicht, und/oder einen Energiestrahl zur thermischen Nachbehandlung einer selektiv verfestigten Baumaterialschicht, insbesondere in einem selektiv verfestigten Bereich der Baumaterialschicht, zu erzeugen. Selbstverständlich können seitens der Steuereinrichtung mehrere Bestrahlungseinrichtungen als zweite Bestrahlungseinrichtungen definiert bzw. betrieben werden, welche sonach jeweils auf Grundlage einer auf zweiten Steuerinformationen basierenden Ansteuerung durch die Steuereinrichtung angesteuert sind, einen Energiestrahl zur thermischen Vorbehandlung einer selektiv zu verfestigenden Baumaterialschicht und/oder zur thermischen Nachbehandlung einer selektiv verfestigten Baumaterialschicht zu erzeugen.

Die Vorrichtung ermöglicht es auf Grundlage entsprechender durch die Steuereinrichtung erzeugter Steuerinformationen sonach, unterschiedliche Bestrahlungseinrichtungen gezielt mit unterschiedlichen Funktionen "zu belegen". Wenigstens eine Bestrahlungseinrichtung kann dabei als erste Bestrahlungseinrichtung definiert bzw. betrieben werden, sodass diese einen Energiestrahl zur selektiven Verfestigung einer Baumaterialschicht erzeugt, wenigstens eine andere Bestrahlungseinrichtung kann dabei als zweite Bestrahlungseinrichtung definiert bzw. betrieben werden, sodass diese einen Energiestrahl zur thermischen Vor- bzw. Nachbehandlung einer Baumaterialschicht erzeugt. Eine thermische Vor- bzw. Nachbehandlung einer Baumaterialschicht wird im Folgenden auch als Temperierung einer Baumaterialschicht bezeichnet.

Die derart eröffnete Möglichkeit der Verwendung von Bestrahlungseinrichtungen der Vorrichtung zur Temperierung von Baumaterialschichten erlaubt eine gezielte und lokale Temperierung von Baumaterialschichten sowie eine gezielte Steuerung der Aufheiz- und Abkühlbedingungen respektive eine gezielte Steuerung der Aufschmelz- und Erstarrungsbedingungen des Baumaterials, welche mit bis dato üblichen Heizelementen nicht möglich ist. Über die gezielte Steuerung der Aufheiz- und Abkühlbedingungen respektive der Aufschmelz- und Erstarrungsbedingungen lässt sich - da derart z. B. ein bestimmtes Gefüge eingestellt werden kann - aktiv Einfluss auf die strukturellen Eigenschaften eines herzustellenden Objekts nehmen. Gleichermaßen ist eine Vortrocknung des Baumaterials möglich.

Die Möglichkeit der Verwendung von Bestrahlungseinrichtungen zur Temperierung von Baumaterialschichten erlaubt ferner, dass zur Temperierung einer Baumaterialschicht erheblich weniger Energie aufgebracht werden muss, da keine dauerhafte und langwierige Temperierung des gesamten in der Baukammer befindlichen Baumaterials notwendig ist.

Durch die gezielte lokale Temperierung einer Baumaterialschicht ist zudem die bisher übliche thermische Belastung der Baukammer, mit der Baukammer thermisch gekoppelter Funktionskomponenten der Vorrichtung sowie innerhalb der Baukammer befindlicher bereits additiv aufgebauter Objektabschnitte auf ein Minimum reduziert, da der Eintrag von thermischer Energie zur Temperierung des Baumaterials auf die zu temperierenden Baumaterialbereiche beschränkt werden kann. Auch die thermische Belastung des gegebenenfalls wieder zu verwendeten bzw. wieder zu verwerteten, nicht verfestigten Baumaterials ist auf ein Minimum reduziert. Das Baumaterial wird sonach keiner dauerhaften Temperierung ausgesetzt, welche, wie anhand von Untersuchungen gezeigt werden konnte, zu einem unerwünschten Anstieg des Sauerstoffgehalts in dem Baumaterial führen kann. Überdies ist die Ausbildung von Temperaturgradienten innerhalb von oder zwischen unterschiedlichen Funktionskomponenten der Vorrichtung auf ein Minimum reduziert, sodass ein auf unterschiedliche Wärmeausdehnungen von Funktionskomponenten zurückzuführendes "Wandern" einzelner Funktionskomponenten nicht bzw. kaum möglich ist.

Insgesamt liegt damit eine gegenüber dem eingangs beschriebenen Stand der Technik verbesserte Vorrichtung vor.

Bevor auf weitere Ausführungsformen der Vorrichtung bzw. des mit dieser implementierbaren Verfahrens eingegangen wird, ist anzumerken, dass eine jeweilige Definition der Bestrahlungseinrichtungen als erste oder zweite Bestrahlungseinrichtung typischerweise variierbar, d. h. keinesfalls fest vorgegeben, ist. Die Steuereinrichtung kann sonach eingerichtet sein, wenigstens eine bestimmte Bestrahlungseinrichtung im Rahmen der selektiven Verfestigung einer ersten Baumaterialschicht als erste Bestrahlungseinrichtung zu definieren und entsprechend zu betreiben und dieselbe Bestrahlungseinrichtung im Rahmen der selektiven Verfestigung einer zu der ersten Baumaterialschicht unterschiedlichen weiteren Baumaterialschicht als zweite Bestrahlungseinrichtung zu definieren und entsprechend zu betreiben. Auch kann die Steuereinrichtung eingerichtet sein, wenigstens eine bestimmte Bestrahlungseinrichtung im Rahmen der selektiven Verfestigung eines ersten Bereichs einer Baumaterialschicht als erste Bestrahlungseinrichtung zu definieren und entsprechend zu betreiben und dieselbe Bestrahlungseinrichtung im Rahmen der selektiven Verfestigung eines zu dem ersten Bereich der Baumaterialschicht unterschiedlichen weiteren Bereich der Baumaterialschicht als zweite Bestrahlungseinrichtung zu definieren und entsprechend zu betreiben. Eine Bestrahlungseinrichtung kann im Rahmen der Abarbeitung ein und desselben Bauprozesses sonach ein- oder mehrmals als erste Bestrahlungseinrichtung, d. h. zur selektiven Verfestigung einer Baumaterialschicht, und ein- oder mehrmals als zweite Bestrahlungseinrichtung, d. h. zur Temperierung einer Baumaterialschicht, verwendet werden.

Wenn im Weiteren von einer "ersten Bestrahlungseinrichtung" die Rede ist, ist hierunter eine seitens der Steuereinrichtung zumindest zeitweise als erste Bestrahlungseinrichtung angesteuerte bzw. betriebene Bestrahlungseinrichtung der Vorrichtung zu verstehen. In analoger Weise ist, wenn im Weiteren von einer "zweiten Bestrahlungseinrichtung" die Rede ist, hierunter eine seitens der Steuereinrichtung zumindest zeitweise als zweite Bestrahlungseinrichtung angesteuerte bzw. betriebene Bestrahlungseinrichtung der Vorrichtung zu verstehen.

Die Steuereinrichtung kann wie sich im Weiteren ergibt, eingerichtet sein, zweite Steuerinformationen zu erzeugen, auf Grundlage welcher der durch eine zweite Bestrahlungseinrichtung erzeugte zweite Energiestrahl entlang der gleichen oder einer ungleichen Bewegungsbahn über eine selektiv zu verfestigende oder verfestigte Baumaterialschicht führbar oder geführt ist wie der durch eine erste Bestrahlungseinrichtung erzeugte erste Energiestrahl. Eine zweite Bestrahlungseinrichtung kann sonach eingerichtet sein, einen zweiten Energiestrahl zu erzeugen, welcher entlang der gleichen oder einer ungleichen Bewegungsbahn über eine selektiv zu verfestigende oder verfestigte Baumaterialschicht führbar oder geführt ist wie der durch eine erste Bestrahlungseinrichtung erzeugte erste Energiestrahl.

Die Steuereinrichtung kann insbesondere eingerichtet sein, zweite Steuerinformationen zu erzeugen, auf Grundlage welcher ein durch eine zweite Bestrahlungseinrichtung erzeugter zweiter Energiestrahl einem durch eine erste Bestrahlungseinrichtung erzeugten ersten Energiestrahl mit einem definierbaren oder definierten, insbesondere synchronisierten, örtlichen und/oder zeitlichen Vor- oder Nachlauf vor- oder nachlaufend entlang derselben Bewegungsbahn über eine selektiv zu verfestigende oder verfestigte Baumaterialschicht führbar oder geführt ist wie der durch die erste Bestrahlungseinrichtung erzeugte erste Energiestrahl. Eine zweite Bestrahlungseinrichtung kann sonach eingerichtet sein, einen zweiten Energiestrahl zu erzeugen, welcher einem durch eine erste Bestrahlungseinrichtung erzeugten ersten Energiestrahl vor- oder nachlaufend entlang derselben Bewegungsbahn über eine selektiv zu verfestigende oder verfestigte Baumaterialschicht geführt ist wie der durch die erste Bestrahlungseinrichtung erzeugte erste Energiestrahl.

Mithin kann wenigstens ein zweiter Energiestrahl einem ersten Energiestrahl mit einem bestimmten örtlichen und/oder zeitlichen Vorlauf vorlaufend entlang derselben Bewegungsbahn über eine Baumaterialschicht geführt werden, wodurch sich, etwa zum Zwecke der kontrollierten Beeinflussung bzw. Steuerung des Aufheiz- bzw. Aufschmelzverhaltens des Baumaterials, eine, insbesondere durch den konkreten örtlichen und/oder zeitlichen Vorlauf des zweiten Energiestrahls, gezielt steuerbare Vortemperierung des vermittels des ersten Energiestrahls zu verfestigenden Baumaterials ergibt. Eine entsprechende Vortemperierung ermöglicht im Allgemeinen ein (lokales) Vorheizen des Baumaterials, welche z. B. eine Verarbeitung, insbesondere hochschmelzender, Baumaterialien bzw. eine Trocknung des Baumaterials erlaubt.

Alternativ oder ergänzend kann wenigstens ein zweiter Energiestrahl einem ersten Energiestrahl mit einem bestimmten örtlichen und/oder zeitlichen Nachlauf nachlaufend entlang der gleichen Bewegungsbahn über eine Baumaterialschicht geführt werden, wodurch sich, etwa zum Zwecke der kontrollierten Beeinflussung bzw. Steuerung des Abkühl- bzw. Erstarrungsverhaltens des Baumaterials, eine, insbesondere durch den konkreten örtlichen und/oder zeitlichen Nachlauf des zweiten Energiestrahls, gezielt steuerbare Nachtemperierung des vermittels des ersten Energiestrahls verfestigten Baumaterials ergibt. Eine entsprechende Nachtemperierung ermöglicht im Allgemeinen eine Reduzierung, gegebenenfalls zu einer Rissbildung führender mechanischer Spannungen sowie, insbesondere durch Diffusion von Gasporen, der Gas- bzw. Wasserstoffporosität in dem Objekt.

Analoges gilt für den erfindungsgemäßen Fall, in dem die Vorrichtung mehrere als zweite Bestrahlungseinrichtungen betreibbare oder betriebene Bestrahlungseinrichtungen umfasst. In diesem Fall ist die Steuereinrichtung eingerichtet, zweite Steuerinformationen zu erzeugen, auf Grundlage welcher die durch jeweilige zweite Bestrahlungseinrichtungen erzeugten zweiten Energiestrahlen einem durch eine erste Bestrahlungseinrichtung erzeugten ersten Energiestrahl jeweils mit einem definierbaren oder definierten, insbesondere synchronisierten, örtlichen und/oder zeitlichen Vor- oder Nachlauf vor- oder nachlaufend entlang der gleichen Bewegungsbahn über eine selektiv zu verfestigende oder verfestigte Baumaterialschicht führbar oder geführt sind wie der durch die erste Bestrahlungseinrichtung erzeugte erste Energiestrahl. Die Vorrichtung umfasst sonach mehrere zweite Bestrahlungseinrichtungen, welche eingerichtet sind, mehrere zweite Energiestrahlen zu erzeugen, welche einem durch eine erste Bestrahlungseinrichtung erzeugten ersten Energiestrahl vor- oder nachlaufend entlang der gleichen Bewegungsbahn über eine selektiv zu verfestigende oder verfestigte Baumaterialschicht führbar oder geführt sind wie der durch die erste Bestrahlungseinrichtung erzeugte erste Energiestrahl.

Die Steuereinrichtung ist dabei eingerichtet, den in eine Baumaterialschicht einzubringenden oder eingebrachten Energieeintrag jeweiliger durch jeweilige zweite Bestrahlungseinrichtungen erzeugter zweiter Energiestrahlen in Abhängigkeit des örtlichen und/oder zeitlichen Vor- oder Nachlaufs der jeweiligen zweiten Energiestrahlen zu dem durch die erste Bestrahlungseinrichtung erzeugten ersten Energiestrahl zu steuern. Der über jeweilige zweite Energiestrahlen in die Baumaterialschicht einzubringende oder eingebrachte Energieeintrag ist sonach (nahezu) beliebig variierbar, sodass sich über eine Steuerung des jeweiligen Energieeintrags jeweiliger zweiter Energiestrahlen (nahezu) beliebige bzw. (nahezu) beliebig variierbare Temperaturprofile, d. h. z. B. gleich- oder ungleichmäßig ansteigende oder abfallende Temperaturrampen, realisieren lassen.

Beispielsweise kann der in eine Baumaterialschicht einzubringende oder eingebrachte Energieeintrag eines zweiten Energiestrahls, welcher im Vergleich einen größeren örtlichen und/oder zeitlichen Vor- oder Nachlauf zu einem über eine erste Bestrahlungseinrichtung erzeugten ersten Energiestrahl aufweist, geringer sein als der in die Baumaterialschicht einzubringende oder eingebrachte Energieeintrag eines weiteren zweiten Energiestrahls, welcher im Vergleich einen geringeren örtlichen und/oder zeitlichen Vor- oder Nachlauf zu dem durch die erste Bestrahlungseinrichtung erzeugten Energiestrahl aufweist. Derart ist eine beispielhafte Möglichkeit der Realisierung eines bestimmten Temperaturprofils gegeben, mit welchem die Aufheiz- bzw. Abkühleigenschaften des Baumaterials lokal gezielt beeinflusst werden können.

Vorstehend wurde eine Variante beschrieben, gemäß welcher eine Bewegung erster und zweiter Energiestrahlen in ein und derselben Bewegungsbahn erfolgt, wobei wenigstens ein zweiter Energiestrahl einem ersten Energiestrahl mit einem bestimmten örtlichen und/oder zeitlichen Vor- bzw. Nachlauf vor- bzw. nachlaufend geführt ist/wird.

Nachfolgend wird eine ebenso denkbare und insbesondere mit der zuvor Beschriebenen kombinierbare Variante beschrieben, gemäß welcher eine Bewegung erster und zweiter Energiestrahlen in unterschiedlichen Bewegungsbahnen erfolgt, wobei wenigstens ein zweiter Energiestrahl einem ersten Energiestrahl mit einem bestimmten örtlichen und/oder zeitlichen Versatz seitlich, insbesondere parallel, versetzt zu einem ersten Energiestrahl geführt ist/wird.

Die Steuereinrichtung kann sonach (alternativ oder ergänzend) eingerichtet sein, zweite Steuerinformationen zu erzeugen, auf Grundlage welcher der durch eine zweite Bestrahlungseinrichtung erzeugte zweite Energiestrahl mit einem definierbaren oder definierten örtlichen und/oder zeitlichen Versatz seitlich, insbesondere parallel, versetzt zu einer Bewegungsbahn, entlang welcher der von einer ersten Bestrahlungseinrichtung erzeugte erste Energiestrahl über eine selektiv zu verfestigende Baumaterialschicht führbar oder geführt ist, über die selektiv zu verfestigende oder verfestigte Baumaterialschicht führbar oder geführt ist. Eine zweite Bestrahlungseinrichtung kann sonach eingerichtet sein, einen zweiten Energiestrahl zu erzeugen, welcher seitlich versetzt zu dem durch eine erste Bestrahlungseinrichtung erzeugten ersten Energiestrahl, d. h. nicht in derselben Bewegungsbahn wie der durch die erste Bestrahlungseinrichtung erzeugte erste Energiestrahl, über eine selektiv zu verfestigende oder verfestigte Baumaterialschicht geführt ist.

Wenigstens ein zweiter Energiestrahl kann also mit einem bestimmten örtlichen und/oder zeitlichen Versatz seitlich versetzt zu der Bewegungsbahn eines ersten Energiestrahls über eine Baumaterialschicht geführt werden, wodurch sich gleichermaßen, etwa zum Zwecke der kontrollierten Beeinflussung bzw. Steuerung des Aufheiz- bzw. Aufschmelzverhaltens respektive des Abkühl- bzw. Erstarrungsverhaltens des Baumaterials, eine, insbesondere durch den konkreten örtlichen und/oder zeitlichen seitlichen Versatz des zweiten Energiestrahls, gezielt steuerbare Vor- bzw. Nachtemperierung des vermittels des ersten Energiestrahls zu verfestigenden bzw. verfestigten Baumaterials ergibt.

Analoges gilt wiederum für den Fall, in dem die Vorrichtung mehrere als zweite Bestrahlungseinrichtungen betreibbare oder betriebene Bestrahlungseinrichtungen umfasst. In diesem Fall kann die Steuereinrichtung eingerichtet sein, zweite Steuerinformationen zu erzeugen, auf Grundlage welcher die durch jeweilige zweite Bestrahlungseinrichtungen erzeugten zweiten Energiestrahlen mit einem definierbaren oder definierten örtlichen und/oder zeitlichen Versatz seitlich, insbesondere parallel, versetzt zu einer Bewegungsbahn, entlang welcher ein von einer ersten Bestrahlungseinrichtung erzeugter erster Energiestrahl über eine selektiv zu verfestigende Baumaterialschicht führbar oder geführt ist, über die selektiv zu verfestigende oder verfestigte Baumaterialschicht führbar oder geführt sind. Die Vorrichtung kann sonach mehrere zweite Bestrahlungseinrichtungen umfassen, welche eingerichtet sind, mehrere zweite Energiestrahlen zu erzeugen, welche in einer eigenen Bewegungsbahn seitlich zu dem durch eine erste Bestrahlungseinrichtung erzeugten ersten Energiestrahl versetzt über eine selektiv zu verfestigende oder verfestigte Baumaterialschicht führbar oder geführt sind.

Die Steuereinrichtung kann auch hier eingerichtet sein, den in eine Baumaterialschicht einzubringenden oder eingebrachten Energieeintrag jeweiliger durch jeweilige zweite Bestrahlungseinrichtungen erzeugter zweiter Energiestrahlen in Abhängigkeit des örtlichen und/oder zeitlichen Versatzes der jeweiligen zweiten Energiestrahlen zu der Bewegungsbahn des durch die erste Bestrahlungseinrichtung erzeugten ersten Energiestrahls zu steuern. Auch derart ist der über jeweilige zweite Energiestrahlen in die Baumaterialschicht einzubringende oder eingebrachte Energieeintrag (nahezu) beliebig variierbar, sodass sich über eine geeignete Steuerung des jeweiligen Energieeintrags jeweiliger zweiter Energiestrahlen (nahezu) beliebige bzw. (nahezu) beliebig variierbare Temperaturprofile, d. h. z. B. gleich- oder ungleichmäßig ansteigende oder abfallende Temperaturrampen, realisieren lassen.

Beispielsweise kann der in eine Baumaterialschicht einzubringende oder eingebrachte Energieeintrag eines zweiten Energiestrahls, welcher im Vergleich einen größeren örtlichen und/oder zeitlichen Versatz zu der Bewegungsbahn des durch die erste Bestrahlungseinrichtung erzeugten ersten Energiestrahls aufweist, geringer sein als der in die Baumaterialschicht einzubringende oder eingebrachte Energieeintrag eines weiteren zweiten Energiestrahls, welcher im Vergleich einen geringeren örtlichen und/oder zeitlichen Versatz zu der Bewegungsbahn des durch die erste Bestrahlungseinrichtung erzeugten Energiestrahls aufweist. Derart ist wiederum beispielhaft eine Möglichkeit der Realisierung eines bestimmten Temperaturprofils gegeben, mit welchem die Aufheiz- bzw. Abkühleigenschaften des Baumaterials lokal gezielt beeinflusst werden können.

Unabhängig davon, ob ein zweiter Energiestrahl diesem vor- oder nachlaufend oder mit einem seitlichen Versatz relativ zu einem ersten Energiestrahl geführt ist/wird, gilt, dass sich ein zweiter Energiestrahl in wenigstens einem den Energieeintrag des Energiestrahls in eine Baumaterialschicht beeinflussenden Energiestrahlparameter, von einem ersten Energiestrahl unterscheiden kann. Ein zweiter Energiestrahl kann sich z. B. in der Energiestrahlintensität und/oder dem Energiestrahlfokusdurchmesser, und/oder der Energiestrahlgeschwindigkeit, mit welcher der Energiestrahl über eine Baumaterialschicht geführt wird, von einem ersten Energiestrahl unterscheiden. Die Unterscheidung in dem Energieeintrag erfolgt typischerweise mit der Maßgabe, dass der Energieeintrag eines zweiten Energiestrahls so gering ist, dass ein Aufschmelzen von Baumaterial mit dem zweiten Energiestrahl nicht möglich ist. Mithin weist ein zweiter Energiestrahl typischerweise eine geringere Energiestrahlintensität und/oder einen größeren Energiestrahlfokusdurchmesser als ein erster Energiestrahl auf.

Die Vorrichtung kann eine Erfassungseinrichtung umfassen, welche zur Erfassung wenigstens einer Eigenschaft einer selektiv zu verfestigenden oder selektiv verfestigten Baumaterialschicht, insbesondere eines selektiv zu verfestigenden bzw. eines selektiv verfestigten Bereichs einer selektiv zu verfestigenden oder selektiv verfestigten Baumaterialschicht, und zur Erzeugung einer die wenigstens eine erfasste Eigenschaft der selektiv zu verfestigenden oder selektiv verfestigten Baumaterialschicht beschreibenden Erfassungsinformation eingerichtet ist. Bei einer entsprechenden Eigenschaft kann es sich z. B. um die Temperatur oder den Aggregatszustand, insbesondere den schmelzförmigen Zustand, eines selektiv zu verfestigenden bzw. eines selektiv verfestigten Bereichs handeln, sodass sich über die Erfassungseinrichtung ein lokales Schmelzbad ("Meltpool") erfassen lässt. Bei der Erfassungseinrichtung kann es sich z. B. um eine optische Erfassungseinrichtung, d. h. insbesondere um eine Kameraeinrichtung, handeln bzw. kann die Erfassungseinrichtung wenigstens eine solche umfassen.

Die Steuereinrichtung kann eingerichtet sein, wenigstens einen den Energieeintrag eines jeweiligen Energiestrahls in eine Baumaterialschicht beeinflussenden Energiestrahlparameter eines zweiten Energiestrahls in Abhängigkeit einer durch eine Erfassungsinformation beschriebenen Eigenschaft einer selektiv zu verfestigenden oder verfestigten Baumaterialschicht zu steuern. Durch jeweilige durch eine entsprechende Erfassungsinformation beschriebenen Eigenschaften einer Baumaterialschicht kann, insbesondere in Echtzeit, eine noch exakter kontrollierte Beeinflussung bzw. Steuerung des Aufheiz- bzw. Aufschmelzverhaltens respektive des Abkühl- bzw. Erstarrungsverhaltens der Baumaterialschicht vermittels eines oder mehrerer zweiter Energiestrahlen realisiert werden.

Die Erfindung betrifft neben der Vorrichtung ein Verfahren gemäß Anspruch 14 zur additiven Herstellung dreidimensionaler Objekte durch sukzessives schichtweises selektives Bestrahlen und damit einhergehendes sukzessives schichtweises selektives Verfestigen von Baumaterialschichten aus einem vermittels eines Energiestrahls, insbesondere eines Laserstrahls, verfestigbaren Baumaterial, wobei mehrere Bestrahlungseinrichtungen, welche jeweils zur Erzeugung wenigstens eines Energiestrahls definierbarer Energiestrahleigenschaften eingerichtet sind, verwendet werden. Das Verfahren zeichnet sich dadurch aus, dass wenigstens eine erste Bestrahlungseinrichtung auf Grundlage von durch eine Steuereinrichtung erzeugten ersten Steuerinformationen zur Erzeugung eines ersten Energiestrahls zur sukzessiven schichtweisen selektiven Verfestigung einer Baumaterialschicht betrieben wird, und wenigstens eine zweite Bestrahlungseinrichtung auf Grundlage von durch eine Steuereinrichtung erzeugten zweiten Steuerinformationen zur Erzeugung eines zweiten Energiestrahls zur thermischen Vorbehandlung einer selektiv zu verfestigenden Baumaterialschicht, insbesondere in einem selektiv zu verfestigenden Bereich der Baumaterialschicht, und/oder einen zweiten Energiestrahl zur thermischen Nachbehandlung einer selektiv verfestigten Baumaterialschicht, insbesondere in einem selektiv verfestigten Bereich der Baumaterialschicht betrieben wird, wobei die Vorrichtung mehrere als zweite Bestrahlungseinrichtungen betreibbare oder betriebene Bestrahlungseinrichtungen umfasst, wobei die Steuereinrichtung eingerichtet ist, zweite Steuerinformationen zu erzeugen, auf Grundlage welcher die durch jeweilige zweite Bestrahlungseinrichtungen erzeugten zweiten Energiestrahlen dem durch die erste Bestrahlungseinrichtung erzeugten ersten Energiestrahl jeweils mit einem definierten örtlichen und/oder zeitlichen Vor- oder Nachlauf vor- oder nachlaufend entlang derselben Bewegungsbahn über eine selektiv zu verfestigende oder verfestigte Baumaterialschicht führbar oder geführt sind wie der durch die erste Bestrahlungseinrichtung erzeugte erste Energiestrahl, wobei die Steuereinrichtung eingerichtet ist, den in eine Baumaterialschicht einzubringenden oder eingebrachten Energieeintrag jeweiliger durch jeweilige zweite Bestrahlungseinrichtungen erzeugter Energiestrahlen in Abhängigkeit des örtlichen und/oder zeitlichen Vor- oder Nachlaufs der jeweiligen zweiten Energiestrahlen zu dem durch die erste Bestrahlungseinrichtung erzeugten ersten Energiestrahl zu steuern. Das Verfahren, bei welchem es sich z. B. um ein selektives Laserschmelzverfahren (abgekürzt SLM-Verfahren), um ein selektives Lasersinterverfahren (abgekürzt SLS-Verfahren),oder um ein selektives Elektronenstrahlschmelzverfahren (abgekürzt SEBS-Verfahren) handeln kann, kann mit einer wie beschriebenen Vorrichtung durchgeführt werden. Sämtliche Ausführungen im Zusammenhang mit der Vorrichtung gelten analog für das Verfahren und umgekehrt.

Die Erfindung ist anhand von Ausführungsbeispielen in den Zeichnungen näher erläutert. Dabei zeigt:
- Fig. 1: eine Prinzipdarstellung einer Vorrichtung gemäß einem Ausführungsbeispiel; und
- Fig. 2 - 5: je eine Prinzipdarstellung mehrerer über eine Baumaterialschicht geführter Energiestrahlen.

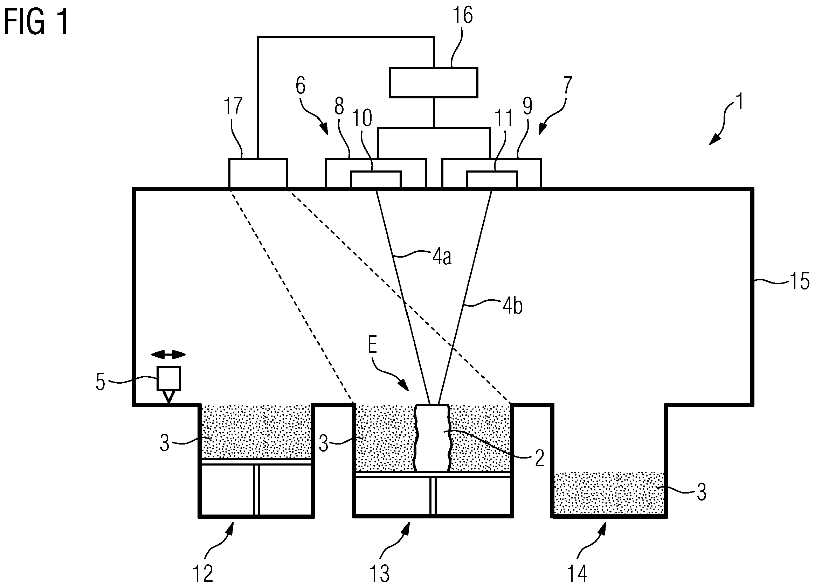

Fig. 1 zeigt eine Prinzipdarstellung einer Vorrichtung 1 gemäß einem Ausführungsbeispiel. Die Vorrichtung 1 dient der additiven Herstellung dreidimensionaler Objekte 2, d. h. insbesondere technischer Bauteile bzw. technischer Bauteilgruppen, durch sukzessives schichtweises selektives Bestrahlen und damit einhergehendes sukzessives schichtweises selektives Verfestigen von Baumaterialschichten aus einem verfestigbaren Baumaterial 3, d. h. z. B. eines Metallpulvers, vermittels eines Energiestrahls, d. h. insbesondere eines Laserstrahls. Die selektive Verfestigung jeweiliger zu verfestigender Baumaterialschichten erfolgt auf Grundlage von objektbezogenen Baudaten. Entsprechende Baudaten beschreiben die geometrische bzw. geometrisch-konstruktive Gestalt des jeweils additiv herzustellenden Objekts 2 und können beispielsweise "geslicte" Daten des herzustellenden Objekts 2 beinhalten. Die Vorrichtung 1 kann z. B. als Laser-CUSING®-Vorrichtung, d. h. als Vorrichtung zur Durchführung selektiver Laserschmelzverfahren (abgekürzt SLM-Verfahren), ausgebildet sein.

Die Vorrichtung 1 umfasst als eine Funktionskomponente zur Durchführung additiver Bauvorgänge eine Beschichtungseinrichtung 5. Die Beschichtungseinrichtung 5 ist zur Ausbildung selektiv zu bestrahlender bzw. selektiv zu verfestigender Baumaterialschichten in einer Bauebene E der Vorrichtung 1 eingerichtet und umfasst hierzu ein relativ zu einer Bauebene E der Vorrichtung 1 bewegbar gelagertes, insbesondere klingenartiges bzw. -förmiges, Beschichtungselement (nicht näher bezeichnet).

Die Vorrichtung 1 umfasst als weitere Funktionskomponenten zur Durchführung additiver Bauvorgänge mehrere, d. h. in dem in Fig. 1 gezeigten Ausführungsbeispiel beispielhaft zwei, Bestrahlungseinrichtungen 6, 7. Jede Bestrahlungseinrichtung 6, 7 umfasst eine zur Erzeugung eines Energiestrahls 4a, 4b, d. h. insbesondere eines Laserstrahls, definierbarer Energiestrahleigenschaften eingerichtete Energiestrahlerzeugungseinrichtung 8, 9 und eine mit dieser optisch gekoppelte zur Ablenkung eines Energiestrahls 4a, 4b auf jeweilige Baumaterialschichten eingerichtete Energiestrahlablenkeinrichtung 10, 11 umfassen. Denkbar wäre es auch, dass eine (einzige) Energiestrahlablenkeinrichtung den jeweiligen Energiestrahlerzeugungseinrichtungen 8, 9 unterschiedlicher Bestrahlungseinrichtungen 6, 7 zugeordnet ist.

In dem in Fig. 1 gezeigten Ausführungsbeispiel ist ferner ein Dosiermodul 12, ein Baumodul 13 und ein Überlaufmodul 14 dargestellt, welche an einen unteren Bereich einer inertisierbaren Prozesskammer 15 der Vorrichtung 1 angedockt sind. Die genannten Module können auch einen unteren Bereich der Prozesskammer 15 der Vorrichtung 1 bilden.

Die Vorrichtung 1 umfasst eine den Bestrahlungseinrichtungen 6, 7 steuerungstechnisch zugeordnete, hard- und/oder softwaremäßig implementierte Steuereinrichtung 16. Die Steuereinrichtung 16 ist zur Erzeugung von den Betrieb der Bestrahlungseinrichtungen 6, 7 steuernden Steuerinformationen sowie zur Steuerung des Betriebs der Bestrahlungseinrichtungen 6, 7 auf Grundlage entsprechend erzeugter Steuerinformationen eingerichtet. Die Steuerung des Betriebs jeweiliger Bestrahlungseinrichtungen 6, 7 beinhaltet insbesondere die Steuerung der Energiestrahlsowie der Bewegungseigenschaften eines über eine jeweilige Bestrahlungseinrichtung 6, 7 erzeugten Energiestrahls 4a, 4b. Die Steuereinrichtung 16 ist eingerichtet, unterschiedliche Steuerinformationen für unterschiedliche Bestrahlungseinrichtungen 6, 7 zu erzeugen, sodass sich die von unterschiedlichen Bestrahlungseinrichtungen 6, 7 erzeugten Energiestrahlen 4a, 4b z. B. in einzelnen oder mehreren Energiestrahleigenschaften und/oder in einzelnen oder mehreren Bewegungseigenschaften unterscheiden.

Die Steuereinrichtung 16 ist eingerichtet, erste Steuerinformationen zur Steuerung des Betriebs einer ersten Bestrahlungseinrichtung, d. h. z. B. der in der Fig. linken Bestrahlungseinrichtung 6, zu erzeugen, auf Grundlage welcher die erste Bestrahlungseinrichtung einen ersten Energiestrahl 4a zur sukzessiven schichtweisen selektiven Verfestigung einer Baumaterialschicht erzeugt. Die seitens der Steuereinrichtung 16 als erste Bestrahlungseinrichtung definierte Bestrahlungseinrichtung 6 ist auf Grundlage der auf ersten Steuerinformationen basierenden Ansteuerung durch die Steuereinrichtung 16 angesteuert bzw. betrieben, einen Energiestrahl 4a zur sukzessiven schichtweisen selektiven Verfestigung einer Baumaterialschicht zu erzeugen.

Die Steuereinrichtung 16 ist weiter eingerichtet, zweite Steuerinformationen zur Steuerung des Betriebs wenigstens einer zweiten Bestrahlungseinrichtung, d. h. z. B. der in der Fig. rechten Bestrahlungseinrichtung 7, zu erzeugen, auf Grundlage welcher die zweite Bestrahlungseinrichtung einen zweiten Energiestrahl 4b zur thermischen Vorbehandlung einer selektiv zu verfestigenden Baumaterialschicht, insbesondere in einem selektiv zu verfestigenden Bereich der Baumaterialschicht, und/oder einen zweiten Energiestrahl 4b zur thermischen Nachbehandlung einer selektiv verfestigten Baumaterialschicht, insbesondere in einem selektiv verfestigten Bereich der Baumaterialschicht, erzeugt. Die seitens der Steuereinrichtung 16 als zweite Bestrahlungseinrichtung definierte Bestrahlungseinrichtung 7 ist auf Grundlage der auf zweiten Steuerinformationen basierenden Ansteuerung durch die Steuereinrichtung 16 angesteuert bzw. betrieben, einen Energiestrahl 4b zur thermischen Vorbehandlung einer selektiv zu verfestigenden Baumaterialschicht, insbesondere in einem selektiv zu verfestigenden Bereich der Baumaterialschicht, und/oder einen Energiestrahl 4b zur thermischen Nachbehandlung einer selektiv verfestigten Baumaterialschicht, insbesondere in einem selektiv verfestigten Bereich der Baumaterialschicht, zu erzeugen.

Die Vorrichtung 1 ermöglicht es auf Grundlage entsprechender durch die Steuereinrichtung 16 erzeugter Steuerinformationen sonach, unterschiedliche Bestrahlungseinrichtungen 6, 7 gezielt mit unterschiedlichen Funktionen "zu belegen". Eine (oder mehrere) Bestrahlungseinrichtung 6 kann dabei als erste Bestrahlungseinrichtung definiert bzw. betrieben werden, sodass diese einen Energiestrahl 4a zur selektiven Verfestigung einer Baumaterialschicht erzeugt, eine (oder mehrere)) andere Bestrahlungseinrichtung 7 kann dabei als zweite Bestrahlungseinrichtung definiert bzw. betrieben werden, sodass diese einen Energiestrahl 4b zur thermischen Vor- bzw. Nachbehandlung ("Temperierung") einer Baumaterialschicht erzeugt.

Die derart eröffnete Möglichkeit der Verwendung einer Bestrahlungseinrichtung, d. h. z. B. der Bestrahlungseinrichtung 7, zur Temperierung von Baumaterialschichten erlaubt eine gezielte und lokale Temperierung von Baumaterialschichten sowie eine gezielte Steuerung der Aufheiz- und Abkühlbedingungen respektive eine gezielte Steuerung der Aufschmelz- und Erstarrungsbedingungen des Baumaterials 3. Über die gezielte Steuerung der Aufheiz- und Abkühlbedingungen respektive der Aufschmelz- und Erstarrungsbedingungen lässt sich - da derart z. B. ein bestimmtes Gefüge eingestellt werden kann - aktiv Einfluss auf die strukturellen Eigenschaften eines herzustellenden Objekts 2 nehmen.

Eine jeweilige Definition der Bestrahlungseinrichtungen 6, 7 als erste oder zweite Bestrahlungseinrichtung ist variierbar, d. h. keinesfalls fest vorgegeben. Die Steuereinrichtung 16 ist sonach eingerichtet, eine bestimmte Bestrahlungseinrichtung 6, 7 im Rahmen der selektiven Verfestigung einer ersten Baumaterialschicht als erste Bestrahlungseinrichtung zu definieren und entsprechend zu betreiben und dieselbe Bestrahlungseinrichtung 6, 7 im Rahmen der selektiven Verfestigung einer zu der ersten Baumaterialschicht unterschiedlichen weiteren Baumaterialschicht als zweite Bestrahlungseinrichtung zu definieren und entsprechend zu betreiben. Auch ist die Steuereinrichtung 16 eingerichtet, eine bestimmte Bestrahlungseinrichtung 6, 7 im Rahmen der selektiven Verfestigung eines ersten Bereichs einer Baumaterialschicht als erste Bestrahlungseinrichtung zu definieren und entsprechend zu betreiben und dieselbe Bestrahlungseinrichtung 6, 7 im Rahmen der selektiven Verfestigung eines zu dem ersten Bereich der Baumaterialschicht unterschiedlichen weiteren Bereich der Baumaterialschicht als zweite Bestrahlungseinrichtung zu definieren und entsprechend zu betreiben. Eine Bestrahlungseinrichtung 6, 7 kann im Rahmen der Abarbeitung ein und desselben Bauprozesses sonach ein- oder mehrmals als erste Bestrahlungseinrichtung, d. h. zur selektiven Verfestigung einer Baumaterialschicht, und ein- oder mehrmals als zweite Bestrahlungseinrichtung, d. h. zur Temperierung einer Baumaterialschicht, verwendet werden.

Wenn im Weiteren von einer "ersten Bestrahlungseinrichtung" die Rede ist, ist hierunter eine seitens der Steuereinrichtung 16 zumindest zeitweise als erste Bestrahlungseinrichtung angesteuerte bzw. betriebene Bestrahlungseinrichtung 6 7 zu verstehen. In analoger Weise ist, wenn im Weiteren von einer "zweiten Bestrahlungseinrichtung" die Rede ist, hierunter eine seitens der Steuereinrichtung 16 zumindest zeitweise als zweite Bestrahlungseinrichtung angesteuerte bzw. betriebene Bestrahlungseinrichtung 6, 7 zu verstehen.

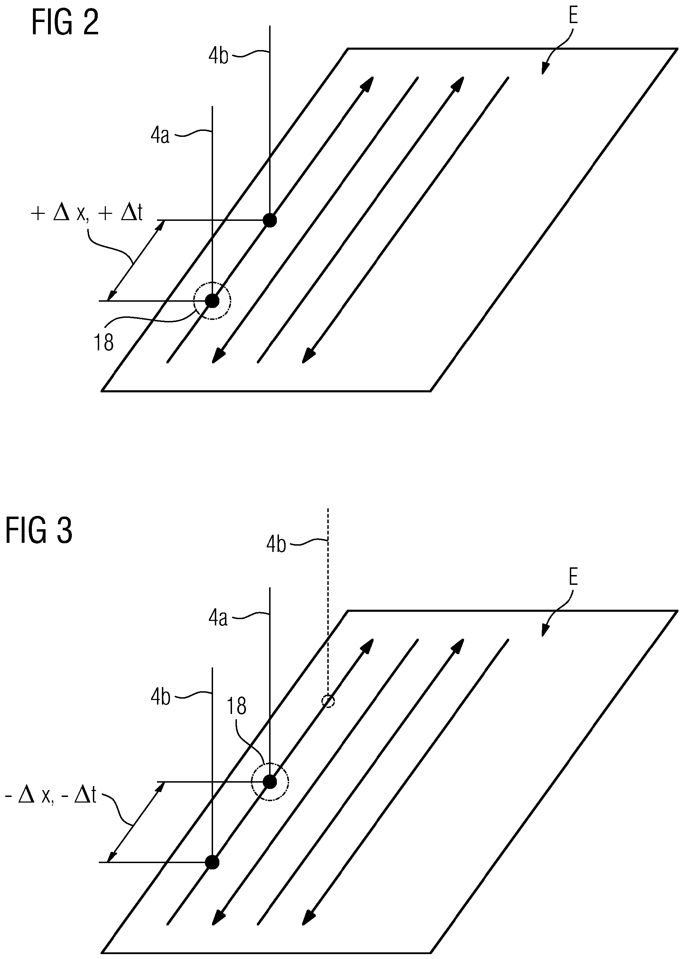

Wie anhand der jeweils eine Prinzipdarstellung mehrerer über eine Baumaterialschicht geführter Energiestrahlen 4a, 4b zeigender Fig. 2 ff ersichtlich ist, ist die Steuereinrichtung 16 eingerichtet, zweite Steuerinformationen zu erzeugen, auf Grundlage welcher ein durch eine zweite Bestrahlungseinrichtung erzeugter zweiter Energiestrahl 4b einem ersten Energiestrahl 4a mit einem definierten, insbesondere synchronisierten, örtlichen und/oder zeitlichen Vorlauf (vgl. Fig. 2) oder Nachlauf (vgl. Fig. 3) vor- oder nachlaufend entlang derselben Bewegungsbahn (vgl. die durch die Pfeile angedeuteten Bewegungsvektoren) über die Baumaterialschicht geführt ist wie der erste Energiestrahl 4a. Ein zweiter Energiestrahl 4b kann einem ersten Energiestrahl 4a sonach mit einem bestimmten örtlichen und/oder zeitlichen Vorlauf (in Fig. 2 durch die Symbole "+Δx" für den örtlichen Vorlauf und "+Δt" für den zeitlichen Vorlauf angedeutet) vorlaufend entlang derselben Bewegungsbahn über eine Baumaterialschicht geführt werden, wodurch sich, etwa zum Zwecke der kontrollierten Beeinflussung bzw. Steuerung des Aufheiz- bzw. Aufschmelzverhaltens des Baumaterials 3, eine, insbesondere durch den konkreten örtlichen und/oder zeitlichen Vorlauf des zweiten Energiestrahls 4b, gezielt steuerbare Vortemperierung des vermittels des ersten Energiestrahls 4a zu verfestigenden Baumaterials 3 ergibt. Ein entsprechender Vorlauf ist in Fig. 2 gezeigt.

Alternativ oder ergänzend kann ein zweiter Energiestrahl 4b einem ersten Energiestrahl 4a mit einem bestimmten örtlichen und/oder zeitlichen Nachlauf (in Fig. 3 durch die Symbole "-Δx" für den örtlichen Vorlauf und "-Δt" für den zeitlichen Nachlauf angedeutet) nachlaufend entlang derselben Bewegungsbahn über eine Baumaterialschicht geführt werden, wodurch sich, etwa zum Zwecke der kontrollierten Beeinflussung bzw. Steuerung des Abkühl- bzw. Erstarrungsverhaltens des Baumaterials 3, eine, insbesondere durch den konkreten örtlichen und/oder zeitlichen Nachlauf des zweiten Energiestrahls 4b, gezielt steuerbare Nachtemperierung des vermittels des ersten Energiestrahls 4a verfestigten Baumaterials 3 ergibt. Ein entsprechender Nachlauf ist in Fig. 3 gezeigt, wobei strichliert dargestellt ist, dass hier optional zusätzlich auch ein entsprechender Vorlauf möglich wäre.

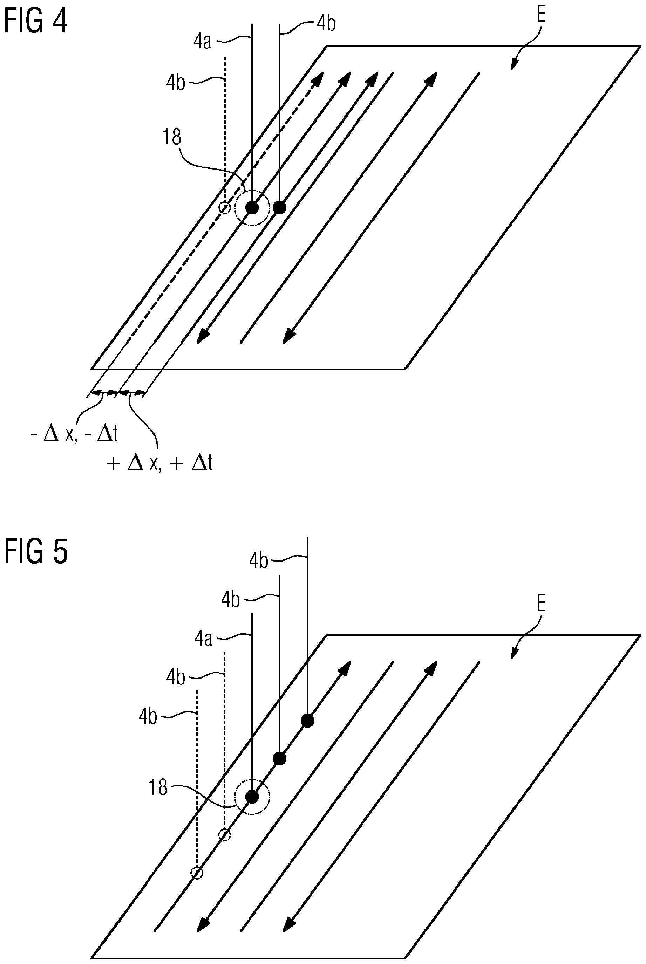

Analoges gilt für den in Fig. 5 dargestellten Fall, in dem die Vorrichtung 1 mehrere als zweite Bestrahlungseinrichtungen betreibbare oder betriebene Bestrahlungseinrichtungen 6, 7 umfasst. In diesem Fall ist die Steuereinrichtung 16 eingerichtet, zweite Steuerinformationen zu erzeugen, auf Grundlage welcher die durch jeweilige zweite Bestrahlungseinrichtungen erzeugten zweiten Energiestrahlen 4b einem ersten Energiestrahl 4a jeweils mit einem definierten, insbesondere synchronisierten, örtlichen und/oder zeitlichen Vor- oder Nachlauf vor- oder nachlaufend entlang der gleichen Bewegungsbahn über eine Baumaterialschicht führbar oder geführt sind wie der erste Energiestrahl 4a. Analog zu Fig. 3 ist hier ein optionaler Nachlauf strichliert dargestellt.

Die Steuereinrichtung 16 ist dabei eingerichtet, den in eine Baumaterialschicht eingebrachten Energieeintrag jeweiliger durch jeweilige zweite Bestrahlungseinrichtungen erzeugter zweiter Energiestrahlen 4b in Abhängigkeit des örtlichen und/oder zeitlichen Vor- oder Nachlaufs der jeweiligen zweiten Energiestrahlen 4b zu dem durch die erste Bestrahlungseinrichtung erzeugten ersten Energiestrahl 4a zu steuern. Der über jeweilige zweite Energiestrahlen 4b in die Baumaterialschicht eingebrachte Energieeintrag ist sonach (nahezu) beliebig variierbar, sodass sich über eine Steuerung des jeweiligen Energieeintrags jeweiliger zweiter Energiestrahlen (nahezu) beliebige bzw. (nahezu) beliebig variierbare Temperaturprofile, d. h. z. B. gleich- oder ungleichmäßig ansteigende oder abfallende Temperaturrampen, realisieren lassen.

In Fig. 4 ist eine ebenso denkbare Variante beschrieben, gemäß welcher eine Bewegung erster und zweiter Energiestrahlen 4a, 4b in unterschiedlichen Bewegungsbahnen erfolgt, wobei wenigstens ein zweiter Energiestrahl 4b einem ersten Energiestrahl 4a mit einem bestimmten örtlichen und/oder zeitlichen Versatz (in Fig. 4 durch die Symbole "+Δx" für den örtlichen Versatz und "+Δt" für den zeitlichen Versatz rechts der Bewegungsbahn des ersten Energiestrahls 4a und durch die Symbole "-Δx" für den örtlichen Versatz und "-Δt" für den zeitlichen Versatz links der Bewegungsbahn des ersten Energiestrahls 4a angedeutet) seitlich, insbesondere parallel, versetzt zu einem ersten Energiestrahl 4a geführt ist/wird.

Die Steuereinrichtung 16 kann sonach eingerichtet sein, zweite Steuerinformationen zu erzeugen, auf Grundlage welcher ein durch eine zweite Bestrahlungseinrichtung erzeugter zweiter Energiestrahl 4b mit einem definierten örtlichen und/oder zeitlichen Versatz seitlich, insbesondere parallel, versetzt zu einer Bewegungsbahn, entlang welcher ein erster Energiestrahl 4a über eine Baumaterialschicht geführt ist, über die Baumaterialschicht geführt ist. Ein zweiter Energiestrahl 4b kann also mit einem bestimmten örtlichen und/oder zeitlichen Versatz seitlich versetzt zu der Bewegungsbahn eines ersten Energiestrahls 4a über eine Baumaterialschicht geführt werden, wodurch sich gleichermaßen, etwa zum Zwecke der kontrollierten Beeinflussung bzw. Steuerung des Aufheiz- bzw. Aufschmelzverhaltens respektive des Abkühl- bzw. Erstarrungsverhaltens des Baumaterials 3, eine, insbesondere durch den konkreten örtlichen und/oder zeitlichen seitlichen Versatz des zweiten Energiestrahls 4b, gezielt steuerbare Vor- bzw. Nachtemperierung des vermittels des ersten Energiestrahls 4a zu verfestigenden bzw. verfestigten Baumaterials 3 ergibt.

Analoges gilt wiederum für den Fall, in dem die Vorrichtung 1 mehrere als zweite Bestrahlungseinrichtungen betreibbare oder betriebene Bestrahlungseinrichtungen 6, 7 umfasst. In diesem Fall ist die Steuereinrichtung 16 eingerichtet, zweite Steuerinformationen zu erzeugen, auf Grundlage welcher die durch jeweilige zweite Bestrahlungseinrichtungen erzeugten zweiten Energiestrahlen 4b mit einem definierten örtlichen und/oder zeitlichen Versatz seitlich, insbesondere parallel, versetzt zu einer Bewegungsbahn, entlang welcher ein erster Energiestrahl 4a über eine Baumaterialschicht geführt ist, über die Baumaterialschicht geführt sind.

Die Steuereinrichtung 16 kann auch hier eingerichtet sein, den in eine Baumaterialschicht eingebrachten Energieeintrag jeweiliger zweiter Energiestrahlen 4b in Abhängigkeit des örtlichen und/oder zeitlichen Versatzes der jeweiligen zweiten Energiestrahlen 4b zu der Bewegungsbahn des ersten Energiestrahls 4a zu steuern. Auch derart ist der über jeweilige zweite Energiestrahlen 4b in die Baumaterialschicht eingebrachte Energieeintrag (nahezu) beliebig variierbar, sodass sich über eine geeignete Steuerung des jeweiligen Energieeintrags jeweiliger zweiter Energiestrahlen 4b (nahezu) beliebige bzw. (nahezu) beliebig variierbare Temperaturprofile, d. h. z. B. gleich- oder ungleichmäßig ansteigende oder abfallende Temperaturrampen, realisieren lassen.

Allgemein gilt, dass sich ein zweiter Energiestrahl 4b in wenigstens einem den Energieeintrag des Energiestrahls 4b in eine Baumaterialschicht beeinflussenden Energiestrahlparameter, von einem ersten Energiestrahl 4a unterscheidet. Der zweite Energiestrahl 4b kann sich z. B. in der Energiestrahlintensität und/oder dem Energiestrahlfokusdurchmesser, und/oder der Energiestrahlgeschwindigkeit, mit welcher der Energiestrahl 4b über eine Baumaterialschicht geführt wird, von dem ersten Energiestrahl 4a unterscheiden. Die Unterscheidung in dem jeweiligen Energieeintrag erfolgt typischerweise mit der Maßgabe, dass der Energieeintrag eines zweiten Energiestrahls 4b so gering ist, dass ein Aufschmelzen von Baumaterial 3 mit dem zweiten Energiestrahl 4b nicht möglich ist.

Zurückkommend auf Fig. 1 ist ersichtlich, dass die Vorrichtung 1 eine z. B. als Kameraeinrichtung ausgebildete Erfassungseinrichtung 17 umfassen kann, welche zur Erfassung wenigstens einer Eigenschaft einer Baumaterialschicht, insbesondere eines selektiv zu verfestigenden bzw. eines selektiv verfestigten Bereichs einer Baumaterialschicht, und zur Erzeugung einer die wenigstens eine erfasste Eigenschaft der Baumaterialschicht beschreibenden Erfassungsinformation eingerichtet ist. Bei einer entsprechenden Eigenschaft kann es sich z. B. um die Temperatur oder den Aggregatszustand, insbesondere den schmelzförmigen Zustand, eines selektiv zu verfestigenden bzw. eines selektiv verfestigten Bereichs handeln, sodass sich über die Erfassungseinrichtung 17 ein lokales Schmelzbad 18 (vgl. Fig. 2 ff) erfassen lässt.

Die Steuereinrichtung 16 kann eingerichtet sein, wenigstens einen den Energieeintrag eines jeweiligen Energiestrahls in eine Baumaterialschicht beeinflussenden Energiestrahlparameter eines zweiten Energiestrahls 4b in Abhängigkeit einer durch eine Erfassungsinformation beschriebenen Eigenschaft einer Baumaterialschicht zu steuern. Durch jeweilige durch eine entsprechende Erfassungsinformation beschriebenen Eigenschaften einer Baumaterialschicht kann, insbesondere in Echtzeit, eine noch exakter kontrollierte Beeinflussung bzw. Steuerung des Aufheiz- bzw. Aufschmelzverhaltens respektive des Abkühl- bzw. Erstarrungsverhaltens der Baumaterialschicht vermittels eines oder mehrerer zweiter Energiestrahlen 4b realisiert werden.

Mit der in Fig. 1 gezeigten Vorrichtung 1 lässt sich ein Verfahren zur additiven Herstellung dreidimensionaler Objekte 2 durch sukzessives schichtweises selektives Bestrahlen und damit einhergehendes sukzessives schichtweises selektives Verfestigen von Baumaterialschichten aus einem vermittels eines Energiestrahls 4a verfestigbaren Baumaterial 3, wobei mehrere Bestrahlungseinrichtungen 6, 7 verwendet werden, implementieren. Das Verfahren zeichnet sich dadurch aus, dass eine erste Bestrahlungseinrichtung auf Grundlage von durch eine Steuereinrichtung 16 erzeugten ersten Steuerinformationen zur Erzeugung eines ersten Energiestrahls 4a zur sukzessiven schichtweisen selektiven Verfestigung einer Baumaterialschicht betrieben wird, und eine zweite Bestrahlungseinrichtung auf Grundlage von durch eine Steuereinrichtung 16 erzeugten zweiten Steuerinformationen zur Erzeugung eines zweiten Energiestrahls 4b zur thermischen Vorbehandlung einer selektiv zu verfestigenden Baumaterialschicht, insbesondere in einem selektiv zu verfestigenden Bereich der Baumaterialschicht, und/oder einen zweiten Energiestrahl 4b zur thermischen Nachbehandlung einer selektiv verfestigten Baumaterialschicht, insbesondere in einem selektiv verfestigten Bereich der Baumaterialschicht betrieben wird.

## Patentansprüche

1. Vorrichtung (1) zur additiven Herstellung dreidimensionaler Objekte (2) durch sukzessives schichtweises selektives Bestrahlen und damit einhergehendes sukzessives schichtweises selektives Verfestigen von Baumaterialschichten aus einem vermittels eines Energiestrahls verfestigbaren Baumaterial (3), umfassend:
- mehrere Bestrahlungseinrichtungen (6, 7), welche jeweils zur Erzeugung wenigstens eines Energiestrahls eingerichtet sind,
- eine Steuereinrichtung (16), welche zur Erzeugung von den Betrieb der Bestrahlungseinrichtungen (6, 7) steuernden Steuerinformationen und zur Steuerung des Betriebs der Bestrahlungseinrichtungen (6, 7) auf Grundlage erzeugter Steuerinformationen eingerichtet ist, wobei
die Steuereinrichtung (16) eingerichtet ist, erste Steuerinformationen zur Steuerung des Betriebs wenigstens einer ersten Bestrahlungseinrichtung zu erzeugen, auf Grundlage welcher die erste Bestrahlungseinrichtung einen ersten Energiestrahl (4a) zum sukzessiven schichtweisen selektiven Verfestigen einer Baumaterialschicht erzeugt, und
eingerichtet ist, zweite Steuerinformationen zur Steuerung des Betriebs wenigstens einer zweiten Bestrahlungseinrichtung zu erzeugen, auf Grundlage welcher die zweite Bestrahlungseinrichtung einen zweiten Energiestrahl (4b) zur thermischen Vorbehandlung einer selektiv zu verfestigenden Baumaterialschicht, insbesondere in einem selektiv zu verfestigenden Bereich der Baumaterialschicht, und/oder einen zweiten Energiestrahl (4b) zur thermischen Nachbehandlung einer selektiv verfestigten Baumaterialschicht, insbesondere in einem selektiv verfestigten Bereich der Baumaterialschicht, erzeugt, wobei sie mehrere als zweite Bestrahlungseinrichtungen betreibbare oder betriebene Bestrahlungseinrichtungen (6, 7) umfasst, wobei die Steuereinrichtung (16) eingerichtet ist, zweite Steuerinformationen zu erzeugen, auf Grundlage welcher die durch jeweilige zweite Bestrahlungseinrichtungen erzeugten zweiten Energiestrahlen (4b) dem durch die erste Bestrahlungseinrichtung erzeugten ersten Energiestrahl (4a) jeweils mit einem definierten örtlichen und/oder zeitlichen Vor- oder Nachlauf vor- oder nachlaufend entlang derselben Bewegungsbahn über eine selektiv zu verfestigende oder verfestigte Baumaterialschicht führbar oder geführt sind wie der durch die erste Bestrahlungseinrichtung erzeugte erste Energiestrahl (4a), **dadurch gekennzeichnet, dass** die Steuereinrichtung (16) eingerichtet ist, den in eine Baumaterialschicht einzubringenden oder eingebrachten Energieeintrag jeweiliger durch jeweilige zweite Bestrahlungseinrichtungen erzeugter Energiestrahlen (4b) in Abhängigkeit des örtlichen und/oder zeitlichen Vor- oder Nachlaufs der jeweiligen zweiten Energiestrahlen (4b) zu dem durch die erste Bestrahlungseinrichtung erzeugten ersten Energiestrahl (4a) zu steuern.

2. Vorrichtung nach Anspruch 1, **dadurch gekennzeichnet, dass** die Steuereinrichtung (16) eingerichtet ist, zweite Steuerinformationen zu erzeugen, auf Grundlage welcher der durch die zweite Bestrahlungseinrichtung erzeugte zweite Energiestrahl (4b) dem durch die erste Bestrahlungseinrichtung erzeugten ersten Energiestrahl (4a) mit einem definierten örtlichen und/oder zeitlichen Vor- oder Nachlauf vor- oder nachlaufend entlang derselben Bewegungsbahn über eine selektiv zu verfestigende oder verfestigte Baumaterialschicht führbar oder geführt ist wie der durch die erste Bestrahlungseinrichtung erzeugte erste Energiestrahl (4a).

3. Vorrichtung nach Anspruch 1 oder 2, **dadurch gekennzeichnet, dass** der in eine Baumaterialschicht einzubringende oder eingebrachte Energieeintrag eines zweiten Energiestrahls (4b), welcher im Vergleich einen größeren örtlichen und/oder zeitlichen Vor- oder Nachlauf zu dem durch die erste Bestrahlungseinrichtung erzeugten ersten Energiestrahl (4a) aufweist, geringer ist als der in die Baumaterialschicht einzubringende oder eingebrachte Energieeintrag eines weiteren zweiten Energiestrahls (4b), welcher im Vergleich einen geringeren örtlichen und/oder zeitlichen Vor- oder Nachlauf zu dem durch die erste Bestrahlungseinrichtung erzeugten Energiestrahl (4a) aufweist.

4. Vorrichtung nach einem der vorhergehenden Ansprüche, **dadurch gekennzeichnet, dass** die Steuereinrichtung (16) eingerichtet ist, zweite Steuerinformationen zu erzeugen, auf Grundlage welcher der durch die zweite Bestrahlungseinrichtung erzeugte zweite Energiestrahl (4b) mit einem definierten örtlichen und/oder zeitlichen Versatz seitlich, insbesondere parallel, zu einer Bewegungsbahn, entlang welcher der von einer ersten Bestrahlungseinrichtung erzeugte erste Energiestrahl (4a) über eine selektiv zu verfestigende Baumaterialschicht führbar oder geführt ist, über die selektiv zu verfestigende oder verfestigte Baumaterialschicht führbar oder geführt ist.

5. Vorrichtung nach einem der vorhergehenden Ansprüche, **dadurch gekennzeichnet, dass** sie mehrere als zweite Bestrahlungseinrichtungen betreibbare oder betriebene Bestrahlungseinrichtungen (6, 7) umfasst, wobei die Steuereinrichtung (16) eingerichtet ist, zweite Steuerinformationen zu erzeugen, auf Grundlage welcher die durch jeweilige zweite Bestrahlungseinrichtungen erzeugten zweiten Energiestrahlen (4b) mit einem definierten örtlichen und/oder zeitlichen Versatz seitlich, insbesondere parallel, zu einer Bewegungsbahn, entlang welcher der durch eine erste Bestrahlungseinrichtung erzeugte erste Energiestrahl (4b) über eine selektiv zu verfestigende Baumaterialschicht führbar oder geführt ist, über die selektiv zu verfestigende oder verfestigte Baumaterialschicht führbar oder geführt sind.

6. Vorrichtung nach Anspruch 5, **dadurch gekennzeichnet, dass** die Steuereinrichtung (16) eingerichtet ist, den in eine Baumaterialschicht einzubringenden oder eingebrachten Energieeintrag jeweiliger durch jeweilige zweite Bestrahlungseinrichtungen erzeugten zweiten Energiestrahlen (4b) in Abhängigkeit des örtlichen und/oder zeitlichen Versatzes des jeweiligen zweiten Energiestrahls (4b) zu der Bewegungsbahn des durch die erste Bestrahlungseinrichtung erzeugten ersten Energiestrahls (4a) zu steuern.

7. Vorrichtung nach Anspruch 6, **dadurch gekennzeichnet, dass** der in eine Baumaterialschicht einzubringende oder eingebrachte Energieeintrag eines zweiten Energiestrahls (4b), welcher im Vergleich einen größeren örtlichen und/oder zeitlichen Versatz seitlich zu der Bewegungsbahn des durch die erste Bestrahlungseinrichtung erzeugten ersten Energiestrahls (4a) aufweist, geringer ist als der in die Baumaterialschicht einzubringende oder eingebrachte Energieeintrag eines weiteren zweiten Energiestrahls (4b), welcher im Vergleich einen geringeren örtlichen und/oder zeitlichen Versatz seitlich zu der Bewegungsbahn des durch die erste Bestrahlungseinrichtung erzeugten ersten Energiestrahls (4a) aufweist.

8. Vorrichtung nach einem der vorhergehenden Ansprüche, **dadurch gekennzeichnet, dass** sich der durch die zweite Bestrahlungseinrichtung erzeugte zweite Energiestrahl (4b) in wenigstens einem den Energieeintrag eines jeweiligen Energiestrahls in eine Baumaterialschicht beeinflussenden Energiestrahlparameter, von dem durch die erste Bestrahlungseinrichtung erzeugten ersten Energiestrahl (4a) unterscheidet.

9. Vorrichtung nach Anspruch 7, **dadurch gekennzeichnet, dass** sich der durch die zweite Bestrahlungseinrichtung erzeugte zweite Energiestrahl (4b) in der Energiestrahlintensität und/oder dem Energiestrahlfokusdurchmesser und/oder der Energiestrahlgeschwindigkeit, mit welcher der Energiestrahl über eine Baumaterialschicht geführt wird, von dem durch die erste Bestrahlungseinrichtung erzeugten ersten Energiestrahl (4a) unterscheidet.

10. Vorrichtung nach einem der vorhergehenden Ansprüche, **gekennzeichnet durch** eine Erfassungseinrichtung (17), welche zur Erfassung wenigstens einer Eigenschaft einer selektiv zu verfestigenden oder selektiv verfestigten Baumaterialschicht, insbesondere eines selektiv zu verfestigenden oder eines selektiv verfestigten Bereichs einer selektiv zu verfestigenden oder selektiv verfestigten Baumaterialschicht, und zur Erzeugung einer die wenigstens eine erfasste Eigenschaft der selektiv zu verfestigenden oder selektiv verfestigten Baumaterialschicht beschreibenden Erfassungsinformation eingerichtet ist.

11. Vorrichtung nach Anspruch 10, **dadurch gekennzeichnet, dass** die Steuereinrichtung (16) eingerichtet ist, wenigstens einen den Energieeintrag eines jeweiligen Energiestrahls in eine Baumaterialschicht beeinflussenden Energiestrahlparameter eines durch die zweite Bestrahlungseinrichtung erzeugten zweiten Energiestrahls (4b) in Abhängigkeit einer durch eine Erfassungsinformation beschriebenen Eigenschaft einer selektiv zu verfestigenden oder verfestigten Baumaterialschicht zu steuern.

12. Vorrichtung nach einem der vorhergehenden Ansprüche, **dadurch gekennzeichnet, dass** die Steuereinrichtung (16) eingerichtet ist, eine bestimmte Bestrahlungseinrichtung (6, 7) im Rahmen der selektiven Verfestigung einer ersten Baumaterialschicht als erste Bestrahlungseinrichtung zu betreiben und dieselbe Bestrahlungseinrichtung (6, 7) im Rahmen der selektiven Verfestigung einer zu der ersten Baumaterialschicht unterschiedlichen weiteren Baumaterialschicht als zweite Bestrahlungseinrichtung zu betreiben.

13. Vorrichtung nach einem der vorhergehenden Ansprüche, **dadurch gekennzeichnet, dass** die Steuereinrichtung (16) eingerichtet ist, eine bestimmte Bestrahlungseinrichtung (6, 7) im Rahmen der selektiven Verfestigung eines ersten Bereichs einer Baumaterialschicht als erste Bestrahlungseinrichtung zu betreiben und dieselbe Bestrahlungseinrichtung (6, 7) im Rahmen der selektiven Verfestigung eines zu dem ersten Bereich der Baumaterialschicht unterschiedlichen weiteren Bereich der Baumaterialschicht als zweite Bestrahlungseinrichtung zu betreiben.

14. Verfahren zur additiven Herstellung dreidimensionaler Objekte (2) durch sukzessives schichtweises selektives Bestrahlen und damit einhergehendes sukzessives schichtweises selektives Verfestigen von Baumaterialschichten aus einem vermittels eines Energiestrahls verfestigbaren Baumaterial (3), wobei mehrere Bestrahlungseinrichtungen (6, 7), welche jeweils zur Erzeugung wenigstens eines Energiestrahls definierter Energiestrahleigenschaften eingerichtet sind, verwendet werden, insbesondere vermittels einer Vorrichtung (1) nach einem der vorhergehenden Ansprüche, wobei wenigstens eine erste Bestrahlungseinrichtung auf Grundlage von durch eine Steuereinrichtung (16) erzeugten ersten Steuerinformationen zur Erzeugung eines ersten Energiestrahls (4a) zur sukzessiven schichtweisen selektiven Verfestigung einer Baumaterialschicht betrieben wird, und
wenigstens eine zweite Bestrahlungseinrichtung auf Grundlage von durch eine Steuereinrichtung (16) erzeugten zweiten Steuerinformationen zur Erzeugung eines zweiten Energiestrahls (4b) zur thermischen Vorbehandlung einer selektiv zu verfestigenden Baumaterialschicht, insbesondere in einem selektiv zu verfestigenden Bereich der Baumaterialschicht, und/oder eines zweiten Energiestrahls (4b) zur thermischen Nachbehandlung einer selektiv verfestigten Baumaterialschicht, insbesondere in einem selektiv verfestigten Bereich der Baumaterialschicht betrieben wird, wobei
die Vorrichtung (1) mehrere als zweite Bestrahlungseinrichtungen betreibbare oder betriebene Bestrahlungseinrichtungen (6, 7) umfasst, wobei die Steuereinrichtung (16) zweite Steuerinformationen erzeugt, auf Grundlage welcher die durch jeweilige zweite Bestrahlungseinrichtungen erzeugten zweiten Energiestrahlen (4b) dem durch die erste Bestrahlungseinrichtung erzeugten ersten Energiestrahl (4a) jeweils mit einem definierten örtlichen und/oder zeitlichen Vor- oder Nachlauf vor- oder nachlaufend entlang derselben Bewegungsbahn über eine selektiv zu verfestigende oder verfestigte Baumaterialschicht führbar oder geführt sind wie der durch die erste Bestrahlungseinrichtung erzeugte erste Energiestrahl (4a), **dadurch gekennzeichnet, dass** die Steuereinrichtung (16) den in eine Baumaterialschicht einzubringenden oder eingebrachten Energieeintrag jeweiliger durch jeweilige zweite Bestrahlungseinrichtungen erzeugter Energiestrahlen (4b) in Abhängigkeit des örtlichen und/oder zeitlichen Vor- oder Nachlaufs der jeweiligen zweiten Energiestrahlen (4b) zu dem durch die erste Bestrahlungseinrichtung erzeugten ersten Energiestrahl (4a) steuert.

## Claims

1. A device (1) for the additive production of three-dimensional objects (2) by successive, layered, selective irradiation and accompanying successive, layered, selective solidification of construction material layers composed of a construction material (3) that can be solidified by means of an energy beam, comprising:
- a plurality of irradiation devices (6, 7), each of which is configured to generate at least one energy beam,
- a control device (16), which is configured to generate control information controlling the operation of the irradiation devices (6, 7) and to control the operation of the irradiation devices (6, 7) based on generated control information, wherein
the control device (16) is configured to generate first control information to control the operation of at least one first irradiation device, on the basis of which the first irradiation device generates a first energy beam (4a) for the successive, layered, selective solidification of a construction material layer, and
is configured to generate second control information to control the operation of at least one second irradiation device, on the basis of which the second irradiation device generates a second energy beam (4b) for the thermal pre-treatment of a construction material layer to be selectively solidified, particularly in a region of the construction material layer to be selectively solidified, and/or a second energy beam (4b) for the thermal post-treatment of a selectively solidified construction material layer, particularly in a selectively solidified region of the construction material layer,
wherein it comprises a plurality of irradiation devices (6, 7) that are operable or operated as second irradiation devices, wherein
the control device (16) is configured to generate second control information, on the basis of which the second energy beams (4b) generated by respective second irradiation devices can be guided or are guided leading or trailing the first energy beam (4a) generated by the first irradiation device, with a defined local and/or temporal lead or lag, along the same trajectory, over a construction material layer that is to be or has been selectively solidified, as the first energy beam (4a) generated by the first irradiation device,
**characterised in that**
the control device (16) is configured to control the energy input, which is to be or has been introduced into a construction material layer, of respective energy beams (4b) generated by respective second irradiation devices as a function of the local and/or temporal lead or lag of the respective second energy beams (4b) relative to the first energy beam (4a) generated by the first irradiation device.

2. The device according to claim 1, **characterised in that** the control device (16) is configured to generate second control information, on the basis of which the second energy beam (4b) generated by the second irradiation device can be guided or is guided leading or trailing the first energy beam (4a) generated by the first irradiation device, with a defined local and/or temporal lead or lag, along the same trajectory, over a construction material layer that is to be or has been selectively solidified, as the first energy beam (4a) generated by the first irradiation device.

3. The device according to claim 1 or 2, **characterised in that** the energy input, which is to be or has been introduced into a construction material layer, of a second energy beam (4b), which has by comparison a larger local and/or temporal lead or lag relative to the first energy beam (4a) generated by the first irradiation device, is lower than the energy input, which is to be or has been introduced into the construction material layer, of a further second energy beam (4b), which has by comparison a smaller local and/or temporal lead or lag relative to the energy beam (4a) generated by the first irradiation device.

4. The device according to one of the preceding claims, **characterised in that** the control device (16) is configured to generate second control information, on the basis of which the second energy beam (4b) generated by the second irradiation device can be guided or is guided over a construction material layer that is to be or has been selectively solidified, with a defined local and/or temporal offset laterally, particularly parallel, to a trajectory along which the first energy beam (4a) generated by a first irradiation device can be guided or is guided over the construction material layer that is to be selectively solidified.

5. The device according to one of the preceding claims, **characterised in that** it comprises a plurality of irradiation devices (6, 7) that are operable or operated as second irradiation devices, wherein
the control device (16) is configured to generate second control information, on the basis of which the second energy beams (4b) generated by the respective second irradiation devices can be guided or are guided over the construction material layer that is to be or has been selectively solidified, with a defined local and/or temporal offset laterally, particularly parallel, to a trajectory along which the first energy beam (4b) generated by a first irradiation device can be guided or is guided over a construction material layer that is to be selectively solidified.

6. The device according to claim 5, **characterised in that** the control device (16) is configured to control the energy input, which is to be or has been introduced into a construction material layer, of respective second energy beams (4b) generated by respective second irradiation devices as a function of the local and/or temporal offset of the respective second energy beam (4b) relative to the trajectory of the first energy beam (4a) generated by the first irradiation device.

7. The device according to claim 6, **characterised in that** the energy input, which is to be or has been introduced into a construction material layer, of a second energy beam (4b), which has by comparison a larger local and/or temporal offset laterally to the trajectory of the first energy beam (4a) generated by the first irradiation device, is lower than the energy input, which is to be or has been introduced into the construction material layer, of a further second energy beam (4b), which has by comparison a smaller local and/or temporal offset laterally to the trajectory of the energy beam (4a) generated by the first irradiation device.

8. The device according to one of the preceding claims, **characterised in that** the second energy beam (4b) generated by the second irradiation device differs from the first energy beam (4a) generated by the first irradiation device in at least one energy beam parameter which influences the energy input of a respective energy beam into a construction material layer.

9. The device according to claim 7, **characterised in that** the second energy beam (4b) generated by the second irradiation device differs from the first energy beam (4a) generated by the first irradiation device in the energy beam intensity and/or the energy beam focus diameter and/or the energy beam velocity at which the energy beam is guided over a construction material layer.

10. The device according to one of the preceding claims, **characterised by** a detection device (17), which is configured to detect at least one property of a construction material layer that is to be or has been selectively solidified, particularly a region that is to be or has been selectively solidified of a construction material layer that is to be or has been selectively solidified, and to generate detection information describing the at least one detected property of the construction material layer that is to be or has been selectively solidified.

11. The device according to claim 10, **characterised in that** the control device (16) is configured to control at least one energy beam parameter, which influences the energy input of a respective energy beam into a construction material layer, of a second energy beam (4b) generated by the second irradiation device as a function of a property, described by detection information, of a construction material layer that is to be or has been selectively solidified.

12. The device according to one of the preceding claims, **characterised in that** the control device (16) is configured to operate a certain irradiation device (6, 7) as a first irradiation device in the course of the selective solidification of a first construction material layer, and to operate the same irradiation device (6, 7) as a second irradiation device in the course of the selective solidification of a further construction material layer which is different from the first construction material layer.

13. The device according to one of the preceding claims, **characterised in that** the control device (16) is configured to operate a certain irradiation device (6, 7) as a first irradiation device in the course of the selective solidification of a first region of a construction material layer, and to operate the same irradiation device (6, 7) as a second irradiation device in the course of the selective solidification of a further region of the construction material layer which is different from the first region of the construction material layer.

14. A method for the additive manufacture of three-dimensional objects (2) by successive, layered, selective irradiation and accompanying successive, layered, selective solidification of construction material layers composed of a construction material (3) that can be solidified by means of an energy beam, wherein a plurality of irradiation devices (6, 7) are used, each configured to generate at least one energy beam having defined energy beam properties, particularly by means of a device (1) according to one of the preceding claims, wherein at least one first irradiation device is operated on the basis of first control information generated by a control device (16) to generate a first energy beam (4a) for the successive, selective solidification of a construction material layer, and
at least one second irradiation device is operated on the basis of second control information generated by the control device (16) to generate a second energy beam (4b) for the thermal pre-treatment of a construction material layer to be selectively solidified, particularly in a region of the construction material layer to be selectively solidified, and/or a second energy beam (4b) for the thermal post-treatment of a selectively solidified construction material layer, particularly in a selectively solidified region of the construction material layer, wherein
the device (1) comprises a plurality of irradiation devices (6, 7) that are operable or operated as second irradiation devices, wherein
the control device (16) generates second control information, on the basis of which the second energy beams (4b) generated by respective second irradiation devices can be guided or are guided leading or trailing the first energy beam (4a) generated by the first irradiation device, with a defined local and/or temporal lead or lag, along the same trajectory, over a construction material layer that is to be or has been selectively solidified, as the first energy beam (4a) generated by the first irradiation device,
**characterised in that**
the control device (16) controls the energy input, which is to be or has been introduced into a construction material layer, of respective energy beams (4b) generated by respective second irradiation devices as a function of the local and/or temporal lead or lag of the respective second energy beams (4b) relative to the first energy beam (4a) generated by the first irradiation device.

## Revendications

1. Dispositif (1) de fabrication additive d'objets tridimensionnels (2) par irradiation sélective successive couche par couche et par solidification concomitante sélective successive couche par couche de couches de matériau de construction à partir de matériau de construction (3) pouvant être solidifié au moyen d'un faisceau d'énergie, comprenant :
- plusieurs systèmes d'irradiation (6, 7), lesquels sont mis au point respectivement pour générer au moins un faisceau d'énergie,
- un système de commande (16), lequel est mis au point pour générer des informations de commande commandant le fonctionnement des systèmes d'irradiation (6, 7) et pour commander le fonctionnement des systèmes d'irradiation (6, 7) sur la base d'informations de commande générées, dans lequel
le système de commande (16) est mis au point pour générer des premières informations de commande pour commander le fonctionnement d'au moins un premier système d'irradiation, sur la base desquelles le premier système d'irradiation génère un premier faisceau d'énergie (4a) pour la solidification sélective successive couche par couche d'une couche de matériau de construction, et
est mis au point pour générer des deuxièmes informations de commande pour commander le fonctionnement d'au moins un deuxième système d'irradiation, sur la base desquelles le deuxième système d'irradiation génère un deuxième faisceau d'énergie (4b) pour le prétraitement thermique d'une couche de matériau de construction à solidifier de manière sélective, en particulier dans une zone à solidifier de manière sélective de la couche de matériau de construction, et/ou un deuxième faisceau d'énergie (4b) pour le post-traitement thermique d'une couche de matériau de construction solidifiée de manière sélective, en particulier dans une zone solidifiée de manière sélective de la couche de matériau de construction,
dans lequel il comprend plusieurs systèmes d'irradiation (6, 7) pouvant fonctionner ou fonctionnant en tant que deuxièmes systèmes d'irradiation, dans lequel
le système de commande (16) est mis au point pour générer des deuxièmes informations de commande, sur la base desquelles les deuxièmes faisceaux d'énergie (4b) générés par des deuxièmes systèmes d'irradiation respectifs peuvent être guidés ou sont guidés au premier faisceau d'énergie (4a) généré par le premier système d'irradiation de manière à accélérer ou à décélérer respectivement avec une accélération ou une décélération locale et/ou temporelle définie le long de la même trajectoire de déplacement sur une couche de matériau de construction à solidifier ou solidifiée de manière sélective que le premier faisceau d'énergie (4a) généré par le premier système d'irradiation,
**caractérisé en ce que**
le système de commande (16) est mis au point pour commander l'apport en énergie, à introduire ou introduit dans une couche de matériau de construction, de faisceaux d'énergie (4b) respectifs générés par des deuxièmes systèmes d'irradiation respectifs en fonction de l'accélération ou de la décélération locale et/ou temporelle des deuxièmes faisceaux d'énergie (4b) respectifs par rapport au premier faisceau d'énergie (4a) généré par le premier système d'irradiation.

2. Dispositif selon la revendication 1, **caractérisé en ce que** le système de commande (16) est mis au point pour générer des deuxièmes informations de commande, sur la base desquelles le deuxième faisceau d'énergie (4b) généré par le deuxième système d'irradiation peut être guidé ou est guidé au premier faisceau d'énergie (4a) généré par le premier système d'irradiation de manière à accélérer ou à décélérer avec une accélération ou une décélération locale et/ou temporelle définie le long de la même trajectoire de déplacement sur une couche de matériau de construction à solidifier ou solidifiée de manière sélective que le premier faisceau d'énergie (4a) généré par le premier système d'irradiation.

3. Dispositif selon la revendication 1 ou 2, **caractérisé en ce que** l'apport en énergie, à introduire ou introduit dans une couche de matériau de construction, d'un deuxième faisceau d'énergie (4b), lequel présente comparativement une accélération ou une décélération locale et/ou temporelle plus importante par rapport au premier faisceau d'énergie (4a) généré par le premier système d'irradiation, est inférieur à l'apport en énergie, à introduire ou introduit dans la couche de matériau de construction, d'un autre deuxième faisceau d'énergie (4b), lequel présente comparativement une accélération ou une décélération locale et/ou temporelle inférieure par rapport au faisceau d'énergie (4a) généré par le premier système d'irradiation.

4. Dispositif selon l'une quelconque des revendications précédentes, **caractérisé en ce que** le système de commande (16) est mis au point pour générer des deuxièmes informations de commande, sur la base desquelles le deuxième faisceau d'énergie (4b) généré par le deuxième système d'irradiation peut être guidé ou est guidé avec un décalage local et/ou temporel défini, sur le côté, en particulier de manière parallèle, par rapport à une trajectoire de déplacement, le long de laquelle le premier faisceau d'énergie (4a) généré par un premier système d'irradiation peut être guidé ou est guidé sur une couche de matériau de construction à solidifier de manière sélective, sur la couche de matériau à solidifier ou solidifiée de manière sélective.

5. Dispositif selon l'une quelconque des revendications précédentes, **caractérisé en ce qu'**il comprend plusieurs systèmes d'irradiation (6, 7) pouvant fonctionner ou fonctionnant en tant que deuxièmes systèmes d'irradiation, dans lequel le système de commande (16) est mis au point pour générer des deuxièmes informations de commande, sur la base desquelles les deuxièmes faisceaux d'énergie (4b) générés par des deuxièmes systèmes d'irradiation respectifs peuvent être guidés ou sont guidés avec un décalage local et/ou temporel défini sur le côté, en particulier de manière parallèle, par rapport à une trajectoire de déplacement, le long de laquelle le premier faisceau d'énergie (4b) généré par un premier système d'irradiation peut être guidé ou est guidé sur une couche de matériau de construction à solidifier de manière sélective, sur la couche de matériau de construction à solidifier à solidifiée de manière sélective.

6. Dispositif selon la revendication 5, **caractérisé en ce que** le système de commande (16) est mis au point pour commander l'apport en énergie, à introduire ou introduit dans une couche de matériau de construction, de deuxièmes faisceaux d'énergie (4b) générés par des deuxièmes systèmes d'irradiation respectifs en fonction du décalage local et/ou temporel du deuxième faisceau d'énergie (4b) respectif par rapport à la trajectoire de déplacement du premier faisceau d'énergie (4a) généré par le premier système d'irradiation.

7. Dispositif selon la revendication 6, **caractérisé en ce que** l'apport en énergie, à introduire ou introduit dans une couche de matériau de construction, d'un deuxième faisceau d'énergie (4b), lequel présente comparativement un décalage local et/ou temporel plus important sur le côté par rapport à la trajectoire de déplacement du premier faisceau d'énergie (4a) généré par le premier système d'irradiation, est inférieur à l'apport en énergie, à introduire ou introduit dans la couche de matériau de construction, d'un autre deuxième faisceau d'énergie (4b), lequel présente comparativement un décalage local et/ou temporel inférieur sur le côté par rapport à la trajectoire de déplacement du premier faisceau d'énergie (4a) généré par le premier système d'irradiation.

8. Dispositif selon l'une quelconque des revendications précédentes, **caractérisé en ce que** le deuxième faisceau d'énergie (4b) généré par le deuxième système d'irradiation se distingue du premier faisceau d'énergie (4a) généré par le premier système d'irradiation en au moins un paramètre de faisceau d'énergie influençant l'apport en énergie d'un faisceau d'énergie respectif dans une couche de matériau de construction.

9. Dispositif selon la revendication 7, **caractérisé en ce que** le deuxième faisceau d'énergie (4b) généré par le deuxième système d'irradiation se distingue du premier faisceau d'énergie (4a) généré par le premier système d'irradiation dans l'intensité de faisceau d'énergie et/ou dans le diamètre de concentration de faisceau d'énergie et/ou dans la vitesse de faisceau d'énergie, avec laquelle le faisceau d'énergie est guidé sur une couche de matériau de construction.

10. Dispositif selon l'une quelconque des revendications précédentes, **caractérisé par** un système de détection (17), lequel est mis au point pour détecter au moins une propriété d'une couche de matériau de construction à solidifier de manière sélective ou solidifiée de manière sélective, en particulier d'une zone à solidifier de manière sélective ou solidifiée de manière sélective d'une couche de matériau de construction à solidifier de manière élective ou solidifiée de manière sélective et pour générer une information de détection décrivant l'au moins une propriété détectée de la couche de matériau de construction à solidifier de manière sélective ou solidifiée de manière sélective.

11. Dispositif selon la revendication 10, **caractérisé en ce que** le système de commande (16) est mis au point pour commander au moins un paramètre de faisceau d'énergie, influençant l'apport en énergie d'un faisceau d'énergie respectif dans une couche de matériau de construction, d'un deuxième faisceau d'énergie (4b) généré par le deuxième système d'irradiation en fonction d'une propriété, décrite par une information de détection, d'une couche de matériau de construction à solidifier ou solidifiée de manière sélective.

12. Dispositif selon l'une quelconque des revendications précédentes, **caractérisé en ce que** le système de commande (16) est mis au point pour faire fonctionner en tant que premier système d'irradiation un système d'irradiation (6, 7) donné dans le cas de la solidification sélective d'une première couche de matériau de construction et pour faire fonctionner en tant que deuxième système d'irradiation le même système d'irradiation (6, 7) dans le cadre de la solidification sélective d'une autre couche de matériau de construction différente de la première couche de matériau de construction.

13. Dispositif selon l'une quelconque des revendications précédentes, **caractérisé en ce que** le système de commande (16) est mis au point pour faire fonctionner en tant que premier système d'irradiation un système d'irradiation (6, 7) donné dans le cadre de la solidification sélective d'une première zone d'une couche de matériau de construction et pour faire fonctionner en tant que deuxième système d'irradiation le même système d'irradiation (6, 7) dans le cadre de la solidification sélective d'une autre zone, différente de la première zone de la couche de matériau de construction, de la couche de matériau de construction.

14. Procédé de fabrication additive d'objets tridimensionnels (2) par irradiation sélective successive couche par couche et par solidification concomitante sélective successive couche par couche de couches de matériau de construction à partir d'un matériau de construction (3) pouvant être solidifié au moyen d'un faisceau d'énergie, dans lequel plusieurs systèmes d'irradiation (6, 7), lesquels sont mis au point respectivement pour générer au moins un faisceau d'énergie à propriétés de faisceau d'énergie définies, sont utilisés, en particulier au moyen d'un dispositif (1) selon l'une quelconque des revendications précédentes, dans lequel au moins un premier système d'irradiation fonctionne sur la base de premières informations de commande générées par un système de commande (16) pour générer un premier faisceau d'énergie (4a) pour la solidification sélective successive couche par couche d'une couche de matériau de construction, et
au moins un deuxième système d'irradiation fonctionne sur la base de deuxièmes informations de commande générées par un système de commande (16) pour générer un deuxième faisceau d'énergie (4b) pour le prétraitement thermique d'une couche de matériau de construction à solidifier de manière sélective, en particulier dans une zone à solidifier de manière sélective de la couche de matériau de construction, et/ou un deuxième faisceau d'énergie (4b) pour le post-traitement thermique d'une couche de matériau de construction solidifiée de manière sélective, en particulier dans une zone solidifiée de manière sélective de la couche de matériau de construction, dans lequel le dispositif (1) comprend plusieurs systèmes d'irradiation (6, 7) pouvant fonctionner ou fonctionnant en tant que deuxièmes systèmes d'irradiation, dans lequel
le système de commande (16) génère des deuxièmes informations de commande, sur la base desquelles les deuxièmes faisceaux d'énergie (4b) générés par des deuxièmes systèmes d'irradiation respectifs peuvent être guidés ou sont guidés au premier faisceau d'énergie (4a) généré par le premier système d'irradiation de manière à accélérer ou à décélérer respectivement avec une accélération ou une décélération locale et/ou temporelle définie le long de la même trajectoire de déplacement sur une couche de matériau de construction à solidifier ou solidifiée de manière sélective que le premier faisceau d'énergie (4a) généré par le premier système d'irradiation, **caractérisé en ce que**
le système de commande (16) commande l'apport en énergie, à introduire ou introduit dans une couche de matériau de construction, de faisceaux d'énergie (4b) respectifs générés par des deuxièmes systèmes d'irradiation respectifs en fonction de l'accélération ou de la décélération locale et/ou temporelle des deuxièmes faisceaux d'énergie (4b) respectifs par rapport au premier faisceau d'énergie (4a) généré par le premier système d'irradiation.
